# EUROPÄISCHE PATENTSCHRIFT

(11) **EP 3 083 707 B1**
(45) Veröffentlichungstag und Bekanntmachung des Hinweises auf die Patenterteilung: **06.02.2019**
(21) Anmeldenummer: 13815499.2
(22) Anmeldetag: 20.12.2013
(51) Int. Cl.: C08F 2/28, C08F 2/30, C09D 4/00, C25D 13/06

(54) **WÄSSRIGE PRIMÄRDISPERSIONEN, VERFAHREN ZU IHRER HERSTELLUNG UND IHRE VERWENDUNG**
AQUEOUS PRIMARY DISPERSIONS, METHOD FOR PRODUCING SAME, AND USE THEREOF
DISPERSIONS PRIMAIRES AQUEUSES, PROCÉDÉ POUR LEUR PRODUCTION ET LEUR UTILISATION

(43) Veröffentlichungstag der Anmeldung: 26.10.2016
(73) Patentinhaber: BASF Coatings GmbH, 48165 Münster (DE); Henkel AG & Co. KGaA, 40589 Düsseldorf (DE)
(72) Erfinder: MARKOU, Konstantinos, 50739 Köln (DE); NIEGEMEIER, Andreas, 40235 Düsseldorf (DE)
(74) Vertreter: Stromberg, Christian
(86) Internationale Anmeldenummer: PCT/EP2013/077681
(87) Internationale Veröffentlichungsnummer: WO 2015/090442

(56) Entgegenhaltungen:
- WO-A1-82/00148
- WO-A2-2004/007443
- CA-C- 1 333 438
- CN-A- 102 382 504
- CN-A- 102 633 661
- CN-A- 102 875 394
- DE-A1- 19 547 777
- DE-A1- 19 628 142
- DE-A1- 19 628 143
- DE-A1- 19 703 869

## Beschreibung

Die vorliegende Erfindung betrifft wässrige kationisch stabilisierte Primärdispersionen, die Polymerpartikel mit einem mittleren Teilchendurchmessers von 5 bis 500, vorzugsweise 25 bis 500 und besonders bevorzugt 50 bis 500 nm enthalten (sogenannte polymerisierte "Miniemulsionen"). Außerdem betrifft die vorliegende Erfindung ein Verfahren zur Herstellung der wässrigen Primärdispersionen durch Miniemulsionspolymerisation. Des Weiteren betrifft die vorliegende Erfindung die Verwendung der wässrigen Primärdispersionen zur Herstellung von Beschichtungsstoffen, insbesondere zur Herstellung von Beschichtungsstoffen für die Automobilerstlackierung und die Beschichtungsmittelzusammensetzungen selbst.

Miniemulsionen sind Dispersionen aus Wasser, einer Ölphase und einer oder mehreren oberflächenaktiven Substanzen, wobei die dispergiert vorliegenden Teilchen einen mittleren Teilchendurchmesser von 5 bis 500, vorzugsweise 25 bis 500 und besonders bevorzugt 50 bis 500 nm aufweisen. Miniemulsionen werden als metastabil angesehen (vgl. Emulsion Polymerization and Emulsion Polymers, Editoren. P. A. Lovell und Mohamed S. EI-Aasser, John Wiley and Sons, Chichester, New York, Weinheim, 1997, Seiten 700ff; Mohamed S. EI-Aasser, Advances in Emulsion Polymerization and Latex Technology, 30th Annual Short Course, Volume 3, June 7-11, 1999, Emulsion Polymers Institute, Lehigh University, Bethlehem, Pennsylvania, U. S. A.). Die sogenannten Miniemulsionen finden in der Technik breite Anwendung beispielsweise in Reinigern, Kosmetika oder Körperpflegeprodukten, aber auch Beschichtungsmittelzusammensetzungen wie beispielsweise Elektrotauchlacken.

Die Herstellung wässriger Primärdispersionen mit Hilfe der Miniemulsionspolymerisation ist beispielsweise aus den internationalen Patentanmeldungen WO 82/00148 und WO 98/02466 oder den deutschen Patentanmeldungen DE 196 28 143 A1 und DE 196 28 142 A2 bekannt. Bei diesen bekannten Verfahren können die Monomeren in der Gegenwart unterschiedlicher niedermolekularer, oligomerer oder polymerer hydrophober Substanzen oder Costabilisatoren copolymerisiert werden (vgl. DE 196 28 142 A2). Außerdem können hydrophobe, in Wasser wenig lösliche organische Hilfsmittel wie beispielsweise Weichmacher, Filmbildehilfsmittel wie beispielsweise Koaleszenzmittel, oder sonstige organische Additive in die Monomertröpfchen der Miniemulsion eingearbeitet werden (vgl. DE 196 28 143 A1). Die WO 82/00148 beschreibt beispielsweise den Einsatz von Emulgatoren zur Stabilisierung der dort offenbarten Emulsionen.

WO 82/00148 offenbart insbesondere die Herstellung von kathodisch abscheidbaren Harzemulsionen, u.a. Miniemulsionen, unter Verwendung kationisch einstellbarer Emulgatoren, die sich an der Oberfläche der Partikel anlagern und diesen eine positive Ladung verleihen, welche die Emulsion bei pH-Werten unterhalb von 10 stabilisiert. Die Emulgatoren können reaktive Gruppen tragen, durch die sie bei der Vernetzungsreaktion in das polymere Harzsystem eingebunden werden können. Explizit genannte Beispiele für Emulgatoren sind die Essigsäuresalze von Fettmono- und -Diaminen wie primären Talg- und Oleylamine oder die Essigsäuresalze von Talg- und Oleyldiaminen. Talg- und Oleylamine enthalten Kohlenwasserstoffketten mit mindestens einer Kohlenstoff-Kohlenstoff-Doppelbindung. Auch polymere Emulgatoren können eingesetzt werden, wie beispielsweise ein Epoxy-Phenol-Addukt, das mit Diethanolamin umgesetzt und mit Essigsäure kationisch eingestellt wurde. Als Co-Emulgator wird in einigen Ausführungsbeispielen der WO 82/00148 Ethoduomeen™ T13 eingesetzt, welches ein tertiäres Amin mit ungesättigtem Alkylrest darstellt. Laut Angabe des Herstellers AkzoNobel handelt es sich um N',N',N-Tris-(2-hydroxyethyl)-N-tallowyl-1,3-diaminopropan. Gemäß der Lehre der WO 82/00148 sind die kationisch eingestellten Emulgatoren die einzigen kationischen Komponenten des Harzsystems.

In einer Studie von Grabs und Schmidt-Naake (Macromol. Symp. 2009, 275-276, S133-141) werden Miniemulsionen aus 2-Aminoethylmethacrylat-Hydrochlorid und Styrol, Butylacrylat und/oder Butylmethacrylat hergestellt und in-situ polymersiert, wobei Harzpartikel entstehen, die aufgrund der positiven Ladung des Aminoethylmethacrylat-Monomers eine positive Oberflächenladung tragen und hierdurch in der Dispersion stabilisiert werden. Als kationischer Co-Emulgator bei der Dispersionsherstellung kann das gesättigte Cetyltrimethylammoniumbromid eingesetzt werden, welches ein quaternäres N-Atom aufweist und daher eine permanente positive Ladung trägt. Die positive Ladung wird in beiden Fällen durch Halogenidanionen kompensiert.

Obwohl die bekannten wässrigen Primärdispersionen und Beschichtungsstoffe auf Basis derartiger Primärdispersionen bereits zahlreiche vorteilhafte Eigenschaften aufweisen, besteht weiterhin ein Bedarf an Beschichtungsmitteln, die eine verbesserte Scherstabilität, insbesondere bessere Pumpbarkeit besitzen. Für den Fall, dass es sich bei den Beschichtungsmittelzusammensetzungen um Elektrotauchlackzusammensetzungen, insbesondere kathodische Elektrotauchlackzusammensetzungen handelt, sollten solche Elektrotauchlackzusammensetzungen eine bessere Ultrafiltrierbarkeit und Langzeitstabilität besitzen. Die unter Verwendung von Primärdispersionen des Stands der Technik herstellbaren Elektrotauchlacke, wie sie beispielsweise in der WO 82/00148 beschrieben sind, besitzen diesbezüglich Unzulänglichkeiten. Neben den vorgenannten Aufgaben sollten aus den Primärdispersionen erhältliche Beschichtungsmittelzusammensetzungen eine verbesserte Filmbildung besitzen und dadurch im Falle der Verwendung als Elektrotauchlack einen verbesserten Korrosionsschutz ermöglichen. Besonders vorteilhaft wäre es, wenn die Primärdispersionen geeignet wären, die Abscheidung von im Elektrotauchlackbad enthaltenen Metallionen zu begünstigen.

CN 102382504 offenbart eine Tintendispersion auf wässriger Basis, die einen Initiator und polymerisierbare Monomere umfasst. Es werden Emulgatoren beschrieben, die aromatische, aliphatische und weitere funktionelle Gruppen enthalten.

Eine Aufgabe der vorliegenden Erfindung ist es wässrige Primärdispersionen bereitzustellen, die in wässrigen Beschichtungsmittelzusammensetzungen einsetzbar sind und diesen eine verbesserte Scherstabilität, insbesondere verbesserte Pumpbarkeit und Ultrafiltrierbarkeit sowie Langzeitstabilität verleihen und wobei die hieraus hergestellten wässrigen Beschichtungsmittel bessere Filmbildungseigenschaften aufweisen als die bisher bekannten, so dass sie breiter angewandt werden können, als dies bislang möglich war. Insbesondere sollten die Primärdispersionen mit den üblichen Miniemulsionstechniken erhältlich sein. Ferner war es eine Aufgabe der vorliegenden Erfindung Beschichtungsmittelzusammensetzungen zur Verfügung zu stellen, welche die erfindungsgemäßen Primärdispersionen enthalten und die beispielsweise im Bereich der Elektrotauchlackierung als Beschichtungsmittelbestandteil eingesetzt werden können, um die Filmbildung der Elektrotauchlacke zu verbessern und einen erhöhten Korrosionsschutz metallischer Substrate zu erreichen. Dabei sollen die Vorteile der bisher bekannten wässrigen Primärdispersionen und der hieraus hergestellten Beschichtungsstoffe erhalten bleiben. Des Weiteren ist es die Aufgabe der vorliegenden Erfindung ein Verfahren zur Herstellung der erfindungsgemäßen Primärdispersionen zu finden, das in einfacher Weise wässrige Primärdispersionen mit einem verbesserten Eigenschaftsprofil liefert, die mit den verbesserten oben genannten Eigenschaften ausgestattet sind, insbesondere hervorragende Eignung in Beschichtungsmittelzusammensetzungen besitzen, vor allem in kathodisch abscheidbaren Elektrotauchlacken.

Eine der Aufgaben der vorliegenden Erfindung wurde gelöst durch Bereitstellung einer wässrigen, kationisch stabilisierten Primärdispersion, umfassend
(1) dispergierte Polymerpartikel enthaltend mindestens eine Art von kationischen Gruppen, die
   i. einen Z-mittleren Teilchendurchmesser von 5 bis 500, vorzugsweise 25 bis 500 und besonders bevorzugt 50 bis 500 nm besitzen, und
   ii. erhältlich sind durch Emulsionspolymerisation wenigstens eines olefinisch ungesättigten Monomers (A), wobei die Emulsionspolymerisation in Gegenwart eines oder mehrerer Emulgatoren (E) erfolgt, die folgende Formel besitzen:

      R¹-N(R²)(R³),

      worin
      R¹ ein mindestens eine aromatische Gruppe und mindestens eine aliphatische Gruppe enthaltender Rest mit 15 bis 40 Kohlenstoffatomen ist, der mindestens eine funktionelle Gruppe gewählt aus Hydroxylgruppen, Thiolgruppen und primären oder sekundären Aminogruppen enthält und mindestens eine Kohlenstoff-Kohlenstoff-Mehrfachbindung aufweist, wobei der Rest R¹ - die Struktur Grₐₗᵢ₁-Grₐᵣₒₘ-Grₐₗᵢ₂ - besitzt, worin Grₐᵣₒₘ für eine aromatische Gruppe, Grₐₗᵢ₁ für eine erste aliphatische Gruppe und Grₐᵢᵢ₂ für eine zweite aliphatische Gruppe steht und wobei der Rest R¹ in der aliphatischen Gruppe Grₐₗᵢ₁ die mindestens eine Kohlenstoff-Kohlenstoff-Mehrfachbindung und in der aliphatischen Gruppe Grₐₗᵢ₂ die mindestens eine funktionelle Gruppe gewählt aus Hydroxylgruppen, Thiolgruppen und primären oder sekundären Aminogruppen aufweist,
      und
      R² und R³ unabhängig voneinander gleiche oder verschiedene, aliphatische Reste mit 1 bis 14 Kohlenstoffatomen sind.

Unter dem Begriff der "Primärdispersion" versteht man in der Lacktechnik durch Emulsionspolymersiation hergestellte Polymerdispersionen mit diskreter disperser Phase und mit deutlicher Phasengrenzfläche zwischen disperser Phase (Polymer) und Dispersionsmittel (Wasser). Primärdispersionen sind in der Regel in Bezug auf Koagulation thermodynamisch instabil. Sie müssen daher elektrostatisch oder sterisch stabilisiert werden, das heißt in einen thermodynamisch metastabilen Zustand gebracht werden (siehe beispielsweise: B. Müller, U. Poth, Lackformulierung und Lackrezeptur, Vincentz Network, Hannover, 2. Auflage 2005).

"Wässrig" im Zusammenhang mit der erfindungsgemäßen Primärdispersion, aber auch den weiter unten beschriebenen Beschichtungsmittelzusammensetzungen und insbesondere Elektrotauchlackzusammensetzungen bedeutet hierin, dass der flüchtige Anteil, d.h. der bei einer Trocknung bei Temperatur von 180 °C über 30 min flüchtige Anteil der Primärdispersion oder des Beschichtungsmittels vorzugsweise zu mehr als 50 Gew.-% aus Wasser besteht, besonders bevorzugt zu mehr als 70 Gew.-% und ganz besonders bevorzugt zu mehr als 90 Gew.-% aus Wasser besteht.

Unter dem Begriff der "Miniemulsion" werden hierin solche Primärdispersionen verstanden, deren Primärdispersionsteilchen einen intensitätsbasierten Z-mittleren Teilchendurchmesser von 5 bis 500, vorzugsweise 25 bis 500 und besonders bevorzugt 50 bis 500 nm besitzen. Bei den Primärdispersionen der vorliegenden Erfindung handelt es sich somit um sogenannte Miniemulsionen. Der "Z-mittlere Teilchendurchmesser" lässt sich nach dem Prinzip der dynamischen Lichtstreuung nach ISO 13321 und ISO 22412 bestimmen. Hierfür kann beispielsweise ein Zetasizer Nano S der Firma Malvern verwendet werden. Die Teilchengrößenbestimmung wird bei 25°C an einer mit vollentsalztem Wasser verdünnten erfindungsgemäßen Primärdispersion durchgeführt (0,1 bis 0,5 ml Primärdispersion auf 100 ml vollentsalztes Wasser). Die Messung erfolgt vollautomatisch unter Verwendung von 1 bis 2 ml Probenvolumen in einer Einwegküvette. Die Auswertung der Messung erfolgt mittels der Standardsoftware des oben genannten Messgeräts.

Im Hinblick auf den Stand der Technik war es überraschend und für den Fachmann nicht vorhersehbar, dass die Aufgaben, die der vorliegenden Erfindung zugrunde lagen, durch die erfindungsgemäßen Primärdispersionen und das weiter unten beschriebene Verfahren zu deren Herstellung sowie den aus den Primärdispersionen hergestellten Beschichtungsmittelzusammensetzungen gelöst werden konnten. Insbesondere war es überraschend, dass die erfindungsgemäß zu verwendenden Emulgatoren (E) den Ablauf der (Co)Polymerisation nicht stören und auch nicht zu einer Koagulation der erfindungsgemäßen Primärdispersionen führen, sondern vielmehr für die verbesserten Eigenschaften der Primärdispersionen und der daraus hergestellten Beschichtungsmittelzusammensetzungen maßgeblich verantwortlich sind. Besonders überraschend war es, dass das erfindungsgemäße Verfahren die erfindungsgemäßen Primärdispersionen in besonders einfacher Weise gezielt liefert, ohne dass hierbei die vorstehend beschriebenen, vom Stand der Technik her bekannten Probleme auftreten. Dabei kann das erfindungsgemäße Verfahren, wie weiter unten beschrieben, in überraschend breiter Weise variiert werden, so dass erfindungsgemäße Primärdispersionen in Batch-Fahrweise hergestellt und direkt als thermisch vernetzbare Beschichtungsstoffe oder zur Herstellung solcher Beschichtungsstoffe, verwendet werden können.

Erfindungsgemäß enthalten die Primärdispersionen dispergierte Polymerpartikel. Die Größe der Polymerpartikel ergibt sich direkt aus dem nachfolgend beschriebenen erfindungsgemäßen Verfahren. Hierbei liegt der Z-mittlere Teilchendurchmesser bei 50 bis 500 nm. Vorzugsweise liegt er bei 50 bis 400 nm, besonders bevorzugt bei 50 bis 350 nm und ganz besonders bevorzugt bei 80 bis 300 nm.

Die erfindungsgemäßen Primärdispersionen besitzen vorzugsweise einen hohen Feststoffgehalt, beispielsweise von über 20 Gew.-%, bevorzugt über 30 Gew.-%. Es können sogar Feststoffgehalte von über 40 Gew.-% bis zu 45 Gew.-% erzielt werden. Der Feststoffgehalt wird ermittelt indem 2,0 ± 0,2 g der Primärdispersion für 30 Minuten bei 180 °C getrocknet werden. Der verbleibende Rückstand wird gewogen und ins Verhältnis zur Einwaage gesetzt, woraus sich der Festkörpergehalt ergibt. Die erfindungsgemäßen Primärdispersionen besitzen üblicherweise eine geringe Viskosität, auch bei hohem Feststoffgehalt, was einen weiteren besonderen Vorteil der erfindungsgemäßen Primärdispersionen und der hieraus hergestellten erfindungsgemäßen Beschichtungsstoffe darstellt.

### Olefinisch ungesättigtes Monomer (A)

Eine wesentliche Ausgangsverbindung für die Herstellung der erfindungsgemäßen Primärdispersionen und für das erfindungsgemäße Verfahren ist das mindestens eine olefinisch ungesättigte Monomer (A). Innerhalb dieser Schrift und insbesondere im Folgenden steht der Begriff "(Meth)acryl" für "Methacryl" sowie "Acryl".

Beispiele geeigneter olefinisch ungesättigter Monomere (A) sind:
a1) im wesentlichen säuregruppenfreie (Meth)acrylsäureester wie (Meth)acrylsäurealkylester oder (Meth)acrylsäurecycloalkylester mit bis zu 20 Kohlenstoffatomen im Alkyl- oder Cycloalkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)acrylsäureoxa-alkylester oder -oxacycloalkylester wie Ethyltriglykol(meth)acrylat und Methoxyoligoglykol(meth)acrylat mit einem zahlenmittleren Molekulargewicht Mₙ (bestimmbar mittels Gelpermeationschromatographie unter Verwendung eines Polystyrolstandards) von vorzugsweise etwa 300 bis 800 g/mol oder andere ethoxylierte und/oder propoxylierte hydroxylgruppenfreie (Meth)acrylsäurederivate. Es können in untergeordneten Mengen auch höherfunktionelle (Meth)acrylsäurealkyl- oder -cycloalkylester wie Ethylengylkol-, Propylenglykol-, Diethylenglykol-, Dipropylenglykol-, Butylenglykol-, Pentan-1, 5-diol-, Hexan-1, 6-diol-, Octahydro-4,7-methano-1H-inden-dimethanol- oder Cyclohexan-1, 2-, -1, 3- oder -1,4-diol-di(meth)acrylat; Trimethylolpropan-di- oder-tri(meth)acrylat; oder Pentaerythrit-di-, -tri- oder -tetra(meth)acrylat enthalten sein. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen;
a2) Monomere, welche mindestens eine Hydroxylgruppe, eine primäre, sekundäre, tertiäre oder quaternisierte Aminogruppe, eine Alkoxymethylaminogruppe oder Iminogruppe pro Molekül tragen und im wesentlichen säuregruppenfrei sind, wie Hydroxyalkylester der Acrylsäure, der Methacrylsäure oder einer anderen alpha, beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl- und 4-Hydroxybutylacrylat, -methacrylat, -ethacrylat, -crotonat,-maleinat,- fumarat oder -itaconat; oder Hydroxycycloalkylester wie 1,4-Bis(hydroxymethyl)cyclohexan-, Octahydro-4,7-methano-1H-inden dimethanol- oder Methylpropandiolmonoacrylat, -monomethacrylat, - monoethacrylat, -monocrotonat, -monomaleinat, -monofumarat oder -monoitaconat; oder Umsetzungsprodukte aus cyclischen Estern, wie z. B. epsilon-Caprolacton; oder olefinisch ungesättigte Alkohole wie Allylalkohol oder Polyole wie Trimethylolpropanmono- oder -diallylether oder Pentaerythritmono-, -di- oder -triallylether (hinsichtlich dieser höherfunktionellen Monomeren a2) gilt das für die höherfunktionellen Monomeren a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl) aminoethylacrylat und -methacrylat oder N,N-Di(butoxymethyl)aminopropylacrylat und -methacrylat; im Rahmen dieser Erfindung werden die erfindungsgemäß einsetzbaren Emulgatoren (E) nicht zu den Monomeren a2) gezählt, wenngleich einige Emulgatoren (E) die formelle Definition der Monomere a2) erfüllen;
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester. Im Rahmen der vorliegenden Erfindung werden die Monomeren a3) nicht als die alleinigen Monomeren (A) verwendet, sondern stets in Verbindung mit anderen Monomeren (A) und dies auch nur in solch geringen Mengen, dass die Monomeren a3) nicht außerhalb der Tröpfchen der Miniemulsion polymerisieren;
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z. B. Propylentrimer, Propylentetramer und Diisobutylen. Die Vinylester a4) können aber auch auf an sich bekannte Weise aus den Säuren hergestellt werden, z. B. indem man die Säure mit Acetylen reagieren lässt. Besonders bevorzugt werden wegen der guten Verfügbarkeit Vinylester von gesättigten aliphatischen Monocarbonsäuren mit 9 bis 11 Kohlenstoffatomen, die am alpha-Kohlenstoffatom verzweigt sind, insbesondere aber Versatic®-Säuren (vgl. Römpp Lexikon Lacke und Druckfarben, Georg Thieme Verlag, Stuttgart, New York, 1998, Versatic®-Säuren, Seiten 605 und 606), eingesetzt;
a5) Umsetzungsprodukte aus Acrylsäure und/oder Methacrylsäure mit dem Glycidylester einer in alpha-Stellung verzweigten Monocarbonsäure mit 5 bis 18 Kohlenstoffatomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 Kohlenstoffatomen je Molekül, insbesondere einer Versatic®-Säure, umgesetzt wird;
a6) Cyclische und/oder acyclische Olefine wie Ethylen, Propylen, But-1-en, Pent-1-en, Hex-1-en, Cyclohexen, Cyclopenten, Norbornen, Butadien, Isopren, Cylopentadien und/oder Dicyclopentadien;
a7) (Meth)acrylsäureamide wie (Meth)acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)(meth)acrylsäureamid;
a8) Epoxidgruppen enthaltende Monomere wie die Glycidylester der Acrylsäure, Methacrylsäure, Ethacrylsäure, Crotonsäure, Maleinsäure, Fumarsäure und/oder Itaconsäure;
a9) Vinylaromatische Kohlenwasserstoffe wie Styrol, 1,1-Diphenylethylen, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alpha-methylstyrol (alle Isomere) und/oder p-Vinylbenzsolsulfonsäure;
a10) Nitrile wie Acrylnitril und/oder Methacrylnitril;
a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure;
a12) Allylverbindungen, insbesondere Allylether und -ester wie Allylmethyl-, ethyl-, propyl- oder-butylether oder Allylacetat, -propionat oder -butyrat;
a13) Polysiloxanmakromonomere, die ein zahlenmittleres Molekulargewicht Mₙ von 1000 bis 40000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mₙ von 2000 bis 20000, besonders bevorzugt 2500 bis 10000 und insbesondere 3000 bis 7000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 3706095 A1 in den Spalten 3 bis 7, der EP 0358153 B1 auf den Seiten 3 bis 6, in der US 4,754,014 A1 in den Spalten 5 bis 9, in der DE 4421823 A1 oder in der internationalen Patentanmeldung WO 92/22615 auf Seite 12, Zeile 18, bis Seite 18, Zeile 10, beschrieben sind; und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure.

Weitere Beispiele geeigneter Monomere (A) gehen aus der deutschen Patentanmeldung DE 196 28 142 A 1, Seite 2, Zeile 50, bis Seite 3, Zeile 7, hervor.

Im Grunde kann jedes der vorstehend genannten Monomeren a1) bis a14), ausgenommen das Monomer (a3), für sich alleine polymerisiert werden.

Erfindungsgemäß ist es indes von Vorteil, mindestens zwei Monomere (A) zu verwenden, weil hierdurch das Eigenschaftsprofil der resultierenden Copolymerisate in besonders vorteilhafter Weise sehr breit variiert und dem jeweiligen Verwendungszweck der erfindungsgemäßen Primärdispersionen ganz gezielt angepasst werden kann.

Vorzugsweise werden die Monomeren (A) so ausgewählt, dass (Meth)acrylatcopolymerisate resultieren, deren Eigenschaftsprofil in erster Linie von den vorstehend beschriebenen (Meth)acrylaten bestimmt wird. Als Comonomer (A) werden dann bevorzugt vinylaromatische Kohlenwasserstoffe a9), insbesondere Styrol, verwendet.

Auch die erfindungsgemäß eingesetzten Emulgatoren (E) der Formel R¹-N(R²)(R³), worin R¹ ein sauerstoffhaltiger, mindestens eine aromatische Gruppe und mindestens eine aliphatische Gruppe enthaltender Rest mit 15 bis 40 Kohlenstoffatomen ist, und R² und R³ unabhängig voneinander gleiche oder verschiedene, aliphatische Reste mit 1 bis 14 Kohlenstoffatomen sind, können als polymerisierbare Monomere in Copolymerisation mit den Monomeren (A) bei der Herstellung der Primärdispersion in das Polymer eingebaut werden, sofern die aliphatische Gruppe im Rest R¹ mindestens eine alkenisch oder alkinisch ungesättigte Kohlenstoff-Kohlenstoff-Mehrfachbindung aufweist.

Wird beispielsweise als Emulgator (E) der in den Beispielen beschriebene und verwendete Emulgator E1 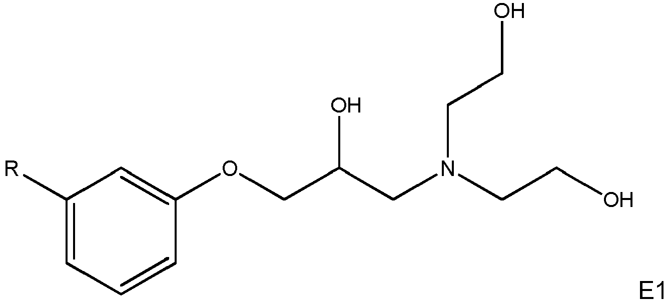 eingesetzt, so kann dieser in die Primäremulsion eingebaut werden, wenn R für C₁₅H₃₁₋₂ₙ steht und n≠0, das heißt n = 1, 2 oder 3 ist. In einem solchen Fall enthält der Emulgators (E) der allgemeinen Formel R¹-N(R²)(R³) im Rest R¹ 1, 2 oder 3 Kohlenstoff-Kohlenstoff-Doppelbindungen, die für eine Copolymerisation mit den Monomeren (A) zur Verfügung stehen.

Als Monomere (A) werden vorzugsweise Monomere aus den obigen Gruppen a1), a2) und a9) gewählt. Aus der Gruppe a1) werden ganz besonders bevorzugt Alkylester der (Meth)acrylsäure wie beispielsweise C₁-C₄-Alkylester der (Meth)acrylsäure und Isobornyl(meth)acrylat eingesetzt. Aus der Gruppe a2) werden ganz besonders bevorzugt Hydroxyalkylester der (Meth)acrylsäure wie beispielsweise Hydroxy-C₂-C₄-Alkylester der (Meth)acrylsäure eingesetzt und/oder Aminoalkylester der (Meth)acrylsäure, hierunter insbesondere N,N-Dialkylaminoalkylester der (Meth)acrylsäure, ganz besonders bevorzugt N,N-Di-C₁-C₄-Alkylamino-C₂-C₄-alkylester der (Meth)acrylsäure. Der Einsatz von Aminoalkylestern der (Meth)acrylsäure, hierunter insbesondere der N,N-Dialkylaminoalkylester der (Meth)acrylsäure, ganz besonders bevorzugt N,N-Di-C₁-C₄-Alkylamino-C₂-C₄-alkylester der (Meth)acrylsäure , erfolgt besonders bevorzugt wenn der Emulgator (E) keine polymerisierbaren Kohlenstoff-Kohlenstoff-Doppelbindungen aufweist, also nicht zur Copolymerisation mit den Monomeren (A) befähigt ist und/oder wenn die Primäremulsion keine weiteren kathodisch abscheidbaren Harze wie beispielsweise Epoxyaminharze enthält. Aber auch in Gegenwart polymerisierbarer Emulgatoren (E) und/oder weiterer kathodisch abscheidbarer Harze lassen sich die vorgenannten Aminoalkylester der (Meth)acrylsäure vorteilhaft einsetzen. Als Comonomere a9) lassen sich bevorzugt vinylaromatische Kohlenwasserstoffe wie insbesondere Styren und/oder 1,1-Diphenylethylen einsetzen.

Vorzugsweise wird mindestens ein Monomer (A) verwendet, das reaktive funktionelle Gruppen (a) enthält, die mit Gruppen (a) der eigenen Art oder mit komplementären reaktiven funktionellen Gruppen (b) thermisch initiierte Vernetzungsreaktionen eingehen können. Diese Gruppen (a) oder (a) und (b) können in den aus den Monomeren (A) resultierenden (Co)Polymerisaten vorliegen, die dann selbstvernetzende Eigenschaften besitzen. Dementsprechend sind auch die betreffenden erfindungsgemäßen Primärdispersionen und die hieraus hergestellten erfindungsgemäßen Beschichtungsstoffe selbstvernetzend.

Die komplementären reaktiven funktionellen Gruppen (b) können aber auch in den nachstehenden beschriebenen Vernetzungsmitteln (V) vorliegen, die den erfindungsgemäßen Primärdispersionen vor, während und/oder nach ihrer Herstellung zugegeben werden können. Die betreffenden erfindungsgemäßen Primärdispersionen und die hieraus hergestellten erfindungsgemäßen Beschichtungsstoffe sind in diesem Falle fremdvernetzend.

Zu den Begriffen "selbstvernetzend" und "fremdvernetzend" wird ergänzend auf Römpp Lexikon Lacke und Druckfarben, Georg Thieme Verlag, Stuttgart, New York, 1998, Stichwort: "Härtung", Seiten 274 bis 276, verwiesen.

Die Auswahl der jeweiligen komplementären Gruppen (a) oder (a) und (b) richtet sich zum einen danach, dass sie bei der Lagerung erfindungsgemäßer Primärdispersionen keine unerwünschten Reaktionen eingehen und/oder gegebenenfalls eine zusätzliche Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Beschichtungsstoffen Vernetzungstemperaturen von Raumtemperatur bis 180 °C angewandt. Es werden daher vorzugsweise Monomere (A) mit Thio-, Hydroxyl-, Methylol-, Methylolether, N-Methylol-N-Alkoxymethylamino-, Imino-, Carbamat-, Allophanat- und/oder Carboxygruppe, insbesondere aber Amino-, Alkoxymethylamino- oder Hydroxylgruppen wie sie in den Monomeren a2) vorkommen, speziell Hydroxylgruppen, einerseits, und Vernetzungsmittel mit Anhydrid-, Carboxy-, Epoxy-, blockierten Isocyanat-, Urethan-, Methylol-, Methylolether-, N-Methylol-N-Alkoxymethylamino-, Siloxan-, Amino-, Hydroxy- und/oder beta-Hydroxyalkylamidgruppen, insbesondere aber blockierten Isocyanat-, Urethan- oder Methylolethergruppen, andererseits angewandt. Für die Herstellung selbstvernetzender erfindungsgemäßer Primärdispersionen werden vorzugsweise Methylol-, Methylolether, N-Methylol-N-Alkoxymethylaminogruppen eingesetzt.

Werden besonders reaktive komplementäre Gruppen (a) oder (b), wie Isocyanatgruppen verwendet, werden die sie enthaltenden Bestandteile, vorzugsweise die Vernetzungsmittel erst kurz vor der Verwendung der erfindungsgemäßen Primärdispersionen zur Herstellung der betreffenden erfindungsgemäßen Beschichtungsstoffe zugesetzt. Diese erfindungsgemäßen Beschichtungsstoffe werden von der Fachwelt auch als Zwei- oder Mehrkomponentensysteme bezeichnet.

Werden weniger reaktive komplementäre Gruppen (a) oder (b) verwendet, werden die sie enthaltenden Bestandteile vorzugsweise vor der Herstellung oder während der Herstellung den erfindungsgemäßen Primärdispersionen zugesetzt, so dass sie von vornherein in den hieraus hergestellten Primärdispersionen und somit auch den erfindungsgemäßen Beschichtungsstoffen enthalten sind. Diese erfindungsgemäßen Beschichtungsstoffe werden von der Fachwelt auch als Einkomponentensysteme bezeichnet. Elektrotauchlacke sind beispielsweise in der Regel derartige Einkomponentensysteme.

Hinsichtlich der Molekulargewichtsverteilung ist das aus den Monomeren (A) sowie gegebenenfalls Emulgator (E) gebildete (Co)polymerisat keinerlei Beschränkungen unterworfen. Vorteilhafterweise wird aber die (Co)polymerisation so geführt, dass eine Molekulargewichtsverteilung M_{w}/Mₙ gemessen mit Gelpermeationschromatographie unter Verwendung von Polystyrol als Standard von < 12, besonders bevorzugt < 10 und insbesondere < 7 resultiert.

### Emulgator (E)

Der zur Herstellung der erfindungsgemäßen Primärdispersionen eingesetzte Emulgator (E) besitzt die allgemeine Formel:

R¹-N(R²)(R³),

worin
R¹ ein mindestens eine aromatische Gruppe und mindestens eine aliphatische Gruppe enthaltender Rest mit 15 bis 40 Kohlenstoffatomen ist, der mindestens eine funktionelle Gruppe gewählt aus Hydroxylgruppen, Thiolgruppen und primären oder sekundären Aminogruppen enthält und/oder mindestens eine Kohlenstoff-Kohlenstoff-Mehrfachbindung aufweist,
und
R² und R³ unabhängig voneinander gleiche oder verschiedene, aliphatische Reste mit 1 bis 14 Kohlenstoffatomen sind.

Unter einer Kohlenstoff-Kohlenstoff-Mehrfachbindung wird hierin eine Kohlenstoff-Kohlenstoff-Doppelbindung oder eine Kohlenstoff-Kohlenstoff-Dreifachbindung verstanden. Vorzugsweise handelt es sich bei der Kohlenstoff-Kohlenstoff-Mehrfachbindung um eine Kohlenstoff-Kohlenstoff-Doppelbindung.

Bevorzugt enthält der Rest R¹ eine aromatische Gruppe Grₐᵣₒₘ und zwei an Grₐᵣₒₘ gebundene aliphatische Gruppen Grₐₗᵢ₁ und Grₐₗᵢ₂. Besonders bevorzugt besitzt der Rest R¹- die Struktur Grₐₗᵢ₁-Grₐᵣₒₘ-Grₐₗᵢ₂-.

Bevorzugt enthält der Rest R¹ in der mindestens einen aliphatischen Gruppe Grₐₗᵢ₁ mindestens eine Kohlenstoff-Kohlenstoff-Mehrfachbindung, besonders bevorzugt mindestens eine Kohlenstoff-Kohlenstoff-Doppelbindung. Das Vorhandensein von Kohlenstoff-Kohlenstoff-Mehrfachbindungen, insbesondere Kohlenstoff-Kohlenstoff-Doppelbindungen wirkt sich positiv auf die Scherstabilität der unter Verwendung der Emulgatoren hergestellten Dispersionen und Beschichtungsmittel aus. Insbesondere kann eine unerwünschte Migration der Emulgatoren in den Dispersionen und Beschichtungsmittelzusammensetzung verhindert oder reduziert werden. Besonders bevorzugt enthält der Rest R¹ in der mindestens einen aliphatischen Gruppe Grₐₗᵢ₁ eine bis drei Kohlenstoff-Kohlenstoff-Doppelbindungen.

Ganz besonders bevorzugt enthält der Rest R¹ in der mindestens einen aliphatischen Gruppe Grₐₗᵢ₁ mindestens eine Kohlenstoff-Kohlenstoff-Mehrfachbindung, insbesondere mindestens eine Kohlenstoff-Kohlenstoff-Doppelbindung, vorzugsweise ein bis drei Kohlenstoff-Kohlenstoff-Doppelbindungen und zusätzlich in einer von der vorgenannten aliphatischen Gruppe Grₐₗᵢ₁ verschiedenen, zweiten aliphatischen Gruppe Grₐₗᵢ₂ mindestens eine funktionelle Gruppe gewählt aus Hydroxylgruppen, Thiolgruppen und primären oder sekundären Aminogruppen. Hydroxygruppen, Thiolgruppen und primäre oder sekundäre Aminogruppen bedingen eine Reaktivität des Emulgators gegenüber lacktypischen Vernetzern wie beispielsweise blockierten oder nicht blockierten Polyisocyanaten, Aminoplastharzen wie beispielsweise Melamin-Formaldehydharzen, Tris(alkoxycarbonylamino)triazinen, die von den vorgenannten Vernetzern verschieden sind oder aber auch Epoxygruppen enthaltenden Harzen. Primärdispersionen, die solche Emulgatoren enthalten, die Hydoxylgruppen, Thiolgruppen und/oder primäre oder sekundäre Aminogruppen tragen, lassen sich somit während des Härtungsprozesses eines mit Hilfe der Primärdispersionen hergestellten Beschichtungsmittels in das Beschichtungsmittel chemisch einbauen, wodurch sich eine unerwünschte Migration der Emulgatoren verhindern oder reduzieren lässt.

Die mindestens eine aliphatische Gruppe Grₐₗᵢ₁ im Rest R¹, die mindestens eine Kohlenstoff-Kohlenstoff-Doppelbindung trägt, kann linear oder verzweigt sein und ist vorzugsweise linear. Sie kann zudem substitutiert oder unsubstituiert sein und ist vorzugsweise unsubstituiert. Darüber hinaus kann diese aliphatische Gruppe Heteroatome gewählt aus der Gruppe bestehend aus O, S und N enthalten, ist jedoch vorzugsweise heteroatomfrei. Diese aliphatische Gruppe im Rest R¹ ist daher besonders bevorzugt linear, unsubstituiert, heteroatomfrei und enthält eine bis drei Doppelbindungen. Vorzugsweise enthält die Gruppe Grₐₗᵢ₁ 8 bis 30, besonders bevorzugt 10 bis 22 und ganz besonders bevorzugt 12 bis 18 Kohlenstoffatome wie beispielsweise 15 Kohlenstoffatome.

Die mindestens eine aliphatische Gruppe Grₐₗᵢ₂ im Rest R¹, die mindestens eine funktionelle Gruppe gewählt aus Hydroxylgruppen, Thiolgruppen und primären oder sekundären Aminogruppen trägt, worunter OH-Gruppen besonders bevorzugt sind, und die von Grₐₗᵢ₁ verschieden ist, kann linear oder verzweigt sein und ist vorzugsweise linear. Sie kann zudem substitutiert oder unsubstituiert sein und ist vorzugsweise unsubstituiert. Darüber hinaus kann diese aliphatische Gruppe Heteroatome gewählt aus der Gruppe bestehend aus O, S und N enthalten, worunter O bevorzugt ist. Die aliphatische Gruppe Grₐₗᵢ₂ ist vorzugsweise direkt an das in der obigen allgemeinen Formel des Emulgators (E) aufgeführte Stickstoffatom gebunden. Vorzugsweise befindet sich die mindestens eine funktionelle Gruppe gewählt aus Hydroxylgruppen, Thiolgruppen und primären oder sekundären Aminogruppen in beta-Stellung zum Stickstoffatom der obigen allgemeinen Formel des Emulgators (E). Steht eine der vorgenannten Gruppen in beta-Stellung zum Stickstoffatom der allgemeinen Formel des Emulgators (E), so können sich zum tertiären Stickstoffatom intramolekulare Wasserstoffbrücken ausbilden, welche die katalytischen Eigenschaften des tertiären Stickstoffatoms reduzieren. Im Ergebnis lässt sich auf diese Art und Weise die Dispersions- und Lagerstabilität solcher erfindungsgemäßen Primärdispersionen oder daraus hergestellter Beschichtungsmittelzusammensetzungen erhöhen, die üblicherweise aminkatalysierte Reaktionen eingehen können. Ein weiterer Vorteil solcher Emulgatoren, bei welchen eine Hydroxylgruppe, Thiolgruppe, oder eine primäre oder sekundäre Aminogruppe in beta-Stellung zum Stickstoffatom des Emulgators der allgemeinen Formel (E) steht liegt in der Möglichkeit Chelate mit Metallionen zu bilden, was von Vorteil ist, wenn gezielt die erfindungsgemäßen Primärdispersionen in Beschichtungsmittelzusammensetzungen eingesetzt werden, aus denen Metallionen abgeschieden werden sollen. Entsprechend chelatisiert vorliegende Metallionen liefern eine verbesserte Abscheidung und können die Korrosionsschutzwirkung derartiger Beschichtungen erhöhen. Ganz besonders bevorzugt steht eine Hydroxylgruppe in beta-Stellung zu besagtem Stickstoffatom. Vorzugsweise enthält die Gruppe Grₐₗᵢ₂ 2 bis 10, besonders bevorzugt 2 bis 8 und ganz besonders bevorzugt 2 bis 6 Kohlenstoffatome wie beispielsweise 2 oder 3 Kohlenstoffatome.

Die aromatische Gruppe Grₐᵣₒₘ im Rest R¹ ist vorzugsweise eine Phenylen- oder Naphthylengruppe, vorzugsweise eine Phenylengruppe. Die aromatische Gruppe Grₐᵣₒₘ kann substituiert oder unsubstituiert sein und ist vorzugsweise unsubstituiert. Die aromatische Gruppe Grₐᵣₒₘ kann Heteroatome enthalten gewählt aus der Gruppe bestehend aus O, S und N, ist jedoch vorzugsweise heteroatomfrei. Vorzugsweise enthält die Gruppe Grₐᵣₒₘ 6 bis 15, besonders bevorzugt 6 bis 12 und ganz besonders bevorzugt 6 bis 10 Kohlenstoffatome wie beispielsweise 6 Kohlenstoffatome.

Ganz besonders bevorzugt ist ein Rest (R¹-) der Formel:

Grₐₗᵢ₁-Grₐᵣₒₘ-Grₐₗᵢ₂-

worin
Grₐₗᵢ₁ linear, unsubstituiert und heteroatomfrei ist und eine bis drei, vorzugsweise eine oder zwei Doppelbindungen aufweist,
Grₐᵣₒₘ eine Phenylen- oder Naphthylen-Gruppe ist, und
Grₐₗᵢ₂ linear ist, eine Hydroxylgruppe trägt, vorzugsweise in beta-Position zum Stickstoffatom der allgemeinen Formel des Emulgators (E) und zusätzlich als Heteroatom O, in Form einer Ethergruppe enthält, wobei vorzugsweise,
im Falle, dass Grₐᵣₒₘ eine Phenylen-Gruppe ist, die Gruppen Grₐₗᵢ₁ und Grₐₗᵢ₂ in meta-Stellung zueinander an die Phenylen-Gruppe gebunden sind.

Die Reste R² und R³ stehen unabhängig voneinander für gleiche oder verschiedene, aliphatische Reste mit 1 bis 14, vorzugsweise 2 bis 10, besonders bevorzugt 2 bis 8 Kohlenstoffatomen. Enthält R¹ keine funktionelle Gruppe gewählt aus Hydroxylgruppen, Thiolgruppen und primären oder sekundären Aminogruppen, so ist es von besonderem Vorteil, wenn wenigstens einer der Reste R² und R³ eine solche funktionelle Gruppe trägt. Ganz besonders bevorzugt tragen mindestens zwei der Reste R¹, R² und R³, noch bevorzugter alle drei Reste R¹, R² und R³ eine funktionelle Gruppe gewählt aus Hydroxylgruppen, Thiolgruppen und primären oder sekundären Aminogruppen. Hierunter ganz besonders bevorzugt sind Hydroxylgruppen. Besonders bevorzugt ist besagte funktionelle Gruppe in den Resten R² und R³ terminal, während sie im Rest R¹ nicht-terminal ist.

Die Reste R² und R³ können dabei linear oder verzweigt sein, vorzugsweise sind sie linear. R² und R³ können Kohlenstoff-Kohlenstoff-Mehrfachbindungen tragen, sind jedoch vorzugsweise gesättigt.

Bevorzugt enthalten die aliphatischen Reste R² und/oder R³ neben den oben genannten Hydroxyl-, Thiol- und primären und sekundären Aminogruppen mindestens eine weitere, vorzugsweise genau eine weitere funktionelle Gruppe gewählt aus Ethergruppen, Estergruppen und Amidgruppen. Der Ethersauerstoff, das -O- der -O-C(=O)-Gruppe und der Amidstickstoff der Amidgruppe befinden sich vorzugsweise in beta-Position zum Stickstoffatom der allgemeinen Formel des Emulgators (E).

In einer besonders bevorzugten Ausführungsform der vorliegenden Erfindung handelt es sich beim Emulgator (E) um ein Cardanolaminopolyol wie es in den chinesischen Patentanmeldungen CN 102633661 A und CN 102875394 A beschrieben ist und welches folgende Formel besitzt: 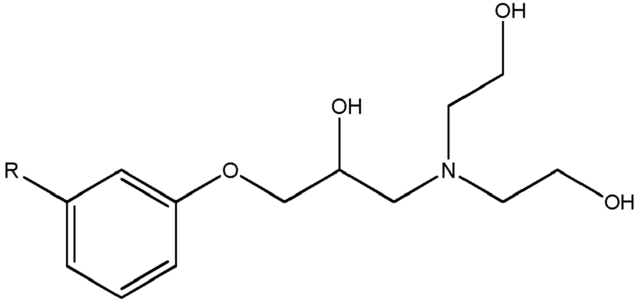 worin R = C₁₅H₃₁₋₂ₙ steht und wobei n = 0 bis 3 sein kann, d.h. der Rest R kann 0 bis 3 Kohlenstoff-Kohlenstoff-Doppelbindungen aufweisen. Bei dieser Verbindung handelt es sich um die Neutralform des Emulgators E1 wie er im Beispielteil der vorliegenden Erfindung beschrieben wird. Diese Verbindung ist beispielsweise dadurch erhältlich, dass man Diethanolamin an einen Cardanolglycidylether der Formel 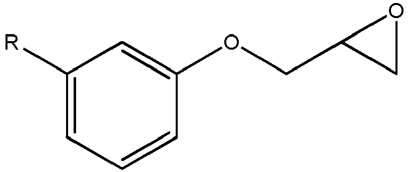 mit R für C₁₅H₃₁₋₂ₙ und n = 0 bis 3, addiert und hierbei den Oxiranring öffnet. Derartige Cardanolglycidylether sind beispielsweise als Cardolite® NC 513 von der Firma Cardolite Europe N.V. (Gent, Belgien) erhältlich.

Ausgehend vom Cardanolglycidylether lässt sich eine Vielzahl bevorzugter, erfindungsgemäßer Emulgatoren durch Addition eines Amins der allgemeinen Formel HN(R²)(R³) an den Oxiranring herstellen. Hierin besitzen die Reste R² und R³ die oben bereits angegebenen Bedeutungen.

Das Ausgangsprodukt zur Herstellung eines Cardanolgylcidylethers ist die natürlich vorkommende Substanz Cardanol, welche folgende Formel 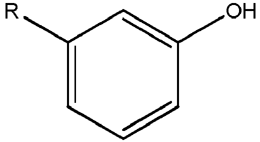 mit R für C₁₅H₃₁₋₂ₙ und n = 0 bis 3 besitzt. Wie aus der Chemie von Naturprodukten, insbesondere der Chemie natürlich vorkommender Fette und Öle und deren Folgeprodukten bekannt, liegen diese Substanzen in der Regel als Gemisch von Einzelverbindungen mit einer unterschiedlichen Anzahl von Kohlenstoff-Kohlenstoff Doppelbindungen vor. Das Naturprodukt Cardanol ist ein derartiges Gemisch, bei dem die Einzelkomponenten sich durch die Anzahl der Doppelbindungen in der Kette R unterscheiden. Die häufigsten Einzelkomponenten enthalten 0 bis 3 Doppelbindungen. Zur Herstellung des Cardanolglycidylethers wird Cardanol beispielsweise mit Epichlorhydrin umgesetzt.

Für alle Ausführungsformen der erfindungsgemäßen Primärdispersionen gilt, dass nicht nur ein Emulgator (E), sondern auch eine Mischung mehrerer Emulgatoren (E) eingesetzt werden kann. Hierunter bevorzugt sind solche Mischungen, bei welchen ein Teil der Emulgatoren im Rest R¹ Kohlenstoff-Kohlenstoff-Mehrfachbindungen trägt und weiterer Teil im Rest R¹ keine Kohlenstoff-Kohlenstoff-Mehrfachbindungen enthält. Beim Einsatz von Emulgatorengemischen mehrerer Emulgatoren (E) enthalten vorzugsweise mehr als 50 mol-%, besonders bevorzugt mehr als 70 mol-% der Reste R¹ Kohlenstoff-Kohlenstoff-Mehrfachbindungen, wobei Kohlenstoff-Kohlenstoff-Doppelbindungen besonders bevorzugt sind. Für die oben genannten Cardanol-Derivate bedeutet dies, dass im Rest R = C₁₅H₃₁₋₂ₙ vorzugsweise in mehr als 50 mol-%, besonders bevorzugt mehr als 70 mol-% der Reste R n = 1 bis 3 ist und in den verbleibenden Resten R n = 0 ist. Es können jedoch auch Emulgatorgemische eingesetzt werden, die nur aus solchen Emulgatoren (E) bestehen, bei welchen n = 1 bis 3 ist oder solche bei welchen n = 0 ist.

Der Emulgator (E) wird in der erfindungsgemäßen Primärdispersion vorzugsweise in einer Menge von 1 bis 10 Gew.-%, besonders bevorzugt einer Menge von 2 bis 8 Gew.-% und ganz besonders bevorzugt in einer Menge von 3 bis 6 Gew.-%, jeweils bezogen auf das Gewicht eines Liters der Dispersion eingesetzt.

### Vernetzungsmittel (V)

Ganz besonders vorteilhafte erfindungsgemäße Primärdispersionen und Beschichtungsstoffe resultieren, wenn die Monomeren (A) und der mindestens eine Emulgator (E) in der Gegenwart mindestens eines hydrophoben, das heißt im wesentlichen wasserunlöslichen Vernetzungsmittels (hierin auch als Vernetzer bezeichnet) (co)polymerisiert werden. Vorzugsweise enthalten die im Wesentlichen wasserunlöslichen Vernetzungsmittel die vorstehend beschriebenen reaktiven funktionellen Gruppen (a) oder (b), die mit den in den resultierenden (Co)Polymerisaten und/oder dem Emulgator (E) vorhandenen komplementären reaktiven funktionellen Gruppen (a) oder (b) Vernetzungsreaktionen eingehen. Die resultierenden erfindungsgemäßen Primärdispersionen enthalten die Vernetzungsmittel in besonders guter Verteilung, weswegen die Vernetzungsreaktionen besonders gut ablaufen, so dass weniger Vernetzungsmittel verwendet werden können als in den entsprechenden Dispersionen, die nach Verfahren des Standes der Technik hergestellt worden sind. Außerdem können die resultierenden erfindungsgemäßen Primärdispersionen direkt als erfindungsgemäße Beschichtungsstoffe verwendet werden.

Beispiele besonders gut geeigneter hydrophober, das heißt im wesentlichen wasserunlöslicher Vernetzungsmittel sind blockierte Polyisocyanate, Tris(alkoxycarbonylamino)triazine oder vollständig veretherte Aminoplastharze, ganz besonders gut geeignet sind blockierte Polyisocyanate.

### Blockierte Polyisocyanate

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit im Mittel 2 bis 5, besonders bevorzugt 2,5 bis 5 Isocyanatgruppen pro Molekül eingesetzt.

Beispiele besonders geeigneter zu blockierender Polyisocyanate sind Isocyanurat-, Biuret-, Allophanat-, Iminooxadiazindion-, Urethan-, Harnstoff-und/oder Uretdiongruppen aufweisende Polyisocyanate.

Urethangruppen aufweisende Polyisocyanate werden beispielsweise durch Umsetzung eines Teils der Isocyanatgruppen mit Polyolen, wie beispielsweise Trimethylolpropan und Glycerin, erhalten. Wird beispielsweise Trimethylolpropan mit 3 Äquivalenten eines Diisocyanats umgesetzt, so resultiert im wesentlichen ein Triisocyanat.

Vorzugsweise werden zur Herstellung der zu blockierenden Polyisocyanate aliphatische oder cycloaliphatische Diisocyanate, insbesondere Hexamethylendiisocyanat, Isophorondiisocyanat, Dicyclohexylmethan-2,4'-diisocyanat, Dicyclohexylmethan-4,4'-diisocyanat, Diphenylmethan-2,4'-diisocyanat, Diphenylmethan-4,4'-diisocyanat, Toluol-2,4-diisocyanat und Toluol-2,6-diisocyanat, Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis (9-isocyanatononyl)-1-pentyl-cyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethylheptan oder 1-Isocyanato-2-(3-isocyanatopropyl)cyclohexan oder Mischungen hieraus eingesetzt.

Die Diisocyanate können als solche ebenfalls zur Herstellung blockierter Diisocyanate verwendet werden. Vorzugsweise werden sie indes nicht alleine, sondern im Gemisch mit den Polyisocyanaten, die im Mittel mehr als zwei Isocyanatgruppen aufweisen verwendet.

Ganz besonders bevorzugt werden Gemische aus Uretdion- und/oder Isocyanuratgruppen und/oder Allophanatgruppen aufweisenden Polyisocyanaten auf Basis von Diphenylmethan-2,4'-diisocyanat, Diphenylmethan-4,4'-diisocyanat, Toluol-2,4-diisocyanat und/oder Toluol-2,6-diisocyanat sowie den Addukten vorstehender Diisocyanate an Polyole, insbesondere Triole wie beispielsweise Trimethylolpropan und Glycerin.

Beispiele geeigneter Blockierungsmittel für die Herstellung der blockierten Dibeziehungsweise Polyisocyanate sind die aus der US-Patentschrift US-A-4,444,954 bekannten Blockierungsmittel wie beispielsweise:
b1) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
b2) Lactame, wie epsilon-Caprolactam, delta-Valerolactam, gamma-Butyrolactam oder beta-Propiolactam;
b3) aktive methylenische Verbindungen, wie Diethylmalonat, Dimethylmalonat, Acetessigsäureethyl- oder -methylester oder Acetylaceton;
b4) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Butyldiglykol, Propylenglykol, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
b5) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
b6) Säureamide wie Acetoanilid, Acetoanisidinamid, Acrylamid, Methacrylamid, Essigsäureamid, Stearinsäureamid oder Benzamid;
b7) Imide wie Succinimid, Phthalimid oder Maleimid;
b8) Amine wie Diphenylamin, Phenylnaphthylamin, Xylidin, N-Phenylxylidin, Carbazol, Anilin, Naphthylamin, Butylamin, Dibutylamin oder Butylphenylamin;
b9) Imidazole wie Imidazol oder 2-Ethylimidazol;
b10) Harnstoffe wie Harnstoff, Thioharnstoff, Ethylenharnstoff, Ethylenthioharnstoff oder 1,3-Diphenylharnstoff;
b11) Carbamate wie N-Phenylcarbamidsäurephenylester oder 2-Oxazolidon;
b12) Imine wie Ethylenimin;
b13) Oxime wie Acetonoxim, Formaldoxim, Acetaldoxim, Acetoxim, Methylethylketoxim, Diisobutylketoxim, Diacetylinonoxim, Benzophenonoxim oder Chlorohexanonoxime;
b14) Salze der schwefeligen Säure wie Natriumbisulfit oder Kaliumbisulfit;
b15) Hydroxamsäureester wie Benzylmethacrylohydroxamat (BMH) oder Allylmethacrylohydroxamat; oder
b16) substituierte Pyrazole, insbesondere Dimethylpyrazol, oder Triazole; sowie
b17) Gemische der vorgenannten Blockierungsmittel.

### Veretherte Aminoplastharze

Beispiele für geeignete vollständig veretherte Aminoplastharze sind Melaminharze, Guanaminharze oder Harnstoffharze. Des Weiteren kommen die üblichen und bekannten Aminoplastharze in Betracht, deren Methylol- und/oder Methoxymethylgruppen zum Teil mittels Carbamat- oder Allophanatgruppen defunktionalisiert sind. Vernetzungsmittel dieser Art werden in den Patentschriften US 4 710 542 A1 und EP 0 245 700 B1 sowie in dem Artikel von B. Singh et al. "Carbamylmethylated Melamines, Novel Crosslinkers for the Coatings Industry" in Advanced Organic Coatings Science and Technology Series, 1991, Band 13, Seiten 193 bis 207, beschrieben.

### Tris(alkoxycarbonylamino)triazine

Geeignete Tris(alkoxycarbonylamino)triazine werden beispielsweise in den Patentschriften US 4,939,213 A1, US 5,084,541 A1 oder der EP 0624577 A1 beschrieben. Insbesondere können Tris(methoxy-, Tris(butoxy- und/oder Tris(2-ethylhexoxycarbonylamino)triazine verwendet werden.

Von den vorstehend beschriebenen Vernetzungsmitteln bieten die blockierten Polyisocyanate besondere Vorteile und werden deshalb erfindungsgemäß ganz besonders bevorzugt verwendet.

Das Verhältnis der Monomeren (A), die komplementäre reaktive funktionelle Gruppen (a) oder (b) enthalten, zu den Vernetzungsmitteln, kann sehr breit variieren. Erfindungsgemäß ist es von Vorteil, wenn das Molverhältnis von komplementären reaktiven funktionellen Gruppen (a) oder (b) in (A) zu komplementären reaktiven funktionellen Gruppen (a) oder (b) in den Vernetzungsmitteln bei 5:1 bis 1:5, bevorzugt 4:1 bis 1:4, besonders bevorzugt 3:1 bis 1:3 und insbesondere 2:1 bis 1:2 liegt. Besondere Vorteile resultieren, wenn das Molverhältnis bei etwa oder genau 1:1 liegt.

### Weitere Bestandteile der Primärdispersionen

Die weiteren Bestandteile der erfindungsgemäßen Primärdispersionen lassen sich einerseits in solche aufteilen, die der Steuerung und Durchführung des erfindungsgemäßen Verfahrens zur Herstellung der erfindungsgemäßen Primärdispersionen dienen wie beispielsweise Initiatoren für die radikalische Emulsionspolymerisation oder Verbindungen, die das Molekulargewicht der Polymere zu steuern vermögen wie Mercaptane, insbesondere Dodecylmercaptan und andererseits in solche, die das Eigenschaftsprofil der Primärdispersionen hinsichtlich des späteren Anwendungsgebiets optimieren.

### Initiatoren der radikalischen Emulsionspolymerisation

Die erfindungsgemäß zu verwendenden Monomere (A) sowie gegebenenfalls polymerisierbare Emulgatoren (E) werden üblicherweise in Gegenwart mindestens eines wasser-und/oder öllöslichen, Radikale bildenden Initiators miteinander zu Copolymerisaten umgesetzt. Beispiele für einsetzbare Initiatoren sind: Dialkylperoxide, wie Di-tert.-Butylperoxid oder Dicumylperoxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate wie Bis (4-tert.-butylcyclohexyl)peroxydicarbonat; Kalium-, Natrium- oder Ammoniumperoxodisulfat; Azoinitiatoren, beispielsweise Azodinitrile wie Azobisisobutyronitril; Initiatoren wie Benzpinakolsilylether; oder eine Kombination eines nicht oxidierenden Initiators mit Wasserstoffperoxid.

Weitere Beispiele geeigneter Initiatoren werden in der deutschen Patentanmeldung DE 196 28 142 A1, Seite 3, Zeile 49, bis Seite 4, Zeile 6, beschrieben. Es können auch Kombinationen dieser Initiatoren eingesetzt werden.

Vorzugsweise beträgt der Anteil des Initiators am Reaktionsgemisch, jeweils bezogen auf die Gesamtmenge der Monomeren (A) und des Initiators 0,1 bis 1,5 Gew.-%, besonders bevorzugt 0,2 bis1,0 Gew.-% und ganz besonders bevorzugt 0,3 bis 0,7 Gew.-%.

### Molekulargewichtsregler

Als Molekulargewichtsregler lassen sich vorzugsweise wasserunlösliche Molekulargewichtsregler einsetzen. Geeignet sind insbesondere Mercaptane wie beispielsweise tert.-Dodecylmercaptan.

### Das Eigenschaftsprofil der Primärdispersionen bestimmende weitere Bestandteile

Als weitere Bestandteile der Primärdispersion können beispielsweise wasserunlösliche niedermolekulare, oligomere oder polymere Substanzen eingesetzt werden. Beispiele geeigneter hydrophober Verbindungen sind oligomere und/oder polymere Polymerisations-, Polykondensations- und/oder Polyadditionsprodukte. Insbesondere können bereits solche Polymere eingesetzt werden, die auf die spätere Anwendung der Primärdispersion in einer bestimmten Art von Beschichtungsmittel abgestimmt sind. So können beispielsweise Epoxy-Amin-Addukte vor oder während der Polymerisation eingearbeitet werden, wie sie in Beschichtungsmitteln, insbesondere Elektrotauchlacken üblicherweise eingesetzt werden.

### Erfindungsgemäßes Verfahren zur Herstellung der erfindungsgemäßen Primärdispersionen

Weiterer Gegenstand der vorliegenden Erfindung ist ein Verfahren zur Herstellung der erfindungsgemäßen Primärdispersionen.

Die Herstellung der Miniemulsion im Rahmen des erfindungsgemäßen Verfahrens weist keine methodischen Besonderheiten auf, sondern erfolgt nach den üblichen und bekannten Verfahren der Dispergierung beziehungsweise Emulgierung in einem hohen Scherfeld. Beispiele geeigneter Verfahren werden in den Patentschriften DE 196 28 142 A1, Seite 5, Zeilen 1 bis 30, DE 196 28 143 A1, Seite 7, Zeilen 30 bis 58, oder EP0 401 565 A1, Zeilen 27 bis 51, beschrieben.

So wird vorzugsweise zunächst eine Mischung aus einem oder mehreren Monomeren (A) mit mindestens einem Emulgator (E), gegebenenfalls einem Molekulargewichtsregler und gegebenenfalls mindestens einem Vernetzungsmittel (V) sowie gegebenenfalls weiterer Bestandteile wie oben beschrieben, so beispielsweise Epoxy-Amin-Harzen, Co-Lösemitteln etc. hergestellt. Diese Mischung wird gegebenenfalls mit einer Säure, vorzugsweise organischen Carbonsäure wie Ameisensäure oder Milchsäure zumindest teilweise neutralisiert und kräftig gerührt bis eine Grobemulsion entsteht.

Anschließend wird unter Eintrag hoher Scherkräfte, gegebenenfalls unter Druck, mittels eine Homogenisators, vorzugsweise Hochdruckhomogenisators eine möglichst homogene noch nicht polymerisierte Miniemulsion erzeugt.

Die Polymerisation findet anschließend in einem geeigneten Reaktor statt. Als Reaktoren für die (Co)polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 1071241 B1 oder EP 0498583 A1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, dass auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Erfindungsgemäß wird die Copolymerisation in einem wässrigen Medium durchgeführt. Hierbei kann das wässrige Medium außer den vorstehend im Detail beschriebenen Emulgatoren, gegebenenfalls Vernetzungsmitteln sowie gegebenenfalls hydrophoben Verbindungen und gegebenenfalls Schutzkolloiden übliche und bekannte Lackadditive und/oder sonstige gelöste feste, flüssige oder gasförmige organische und/oder anorganische, nieder- oder hochmolekulare Stoffe enthalten, sofern diese nicht die (Co)polymerisation in negativer Weise beeinflussen oder gar hemmen. Im Rahmen der vorliegenden-Erfindung ist unter dem Begriff "untergeordnete Menge" eine Menge zu verstehen, welche den wässrigen Charakter des wässrigen Mediums nicht aufhebt.

Bei dem wässrigen Medium kann es sich aber auch um reines Wasser handeln.

Die (Co)polymerisation wird vorteilhafterweise bei Temperaturen oberhalb der Raumtemperatur (25 °C) durchgeführt, wobei bevorzugt ein Temperaturbereich von 25 bis 95°C, ganz besonders bevorzugt 30 bis 90 °C, gewählt wird. Vorzugsweise wird unter einer Schutzgasatmosphäre, insbesondere Stickstoffatmosphäre polymerisiert.

Bei Verwendung besonders leicht flüchtiger Monomere (A) kann die (Co)polymerisation auch unter Druck, vorzugsweise unter 1,5 bis 3000 bar, besonders bevorzugt 5 bis 1500 bar und insbesondere 10 bis 1000 bar durchgeführt werden. Hierbei können in Einzelfällen auch höhere Temperaturen als 95 °C angewandt werden.

Die Aktivierung und Auslösung der Polymerisation erfolgt üblicherweise durch wasserlösliche Initiatoren. Geeignete Initiatoren sind beispielsweise Natrium-, Kalium- und Ammoniumpersulfat oder tert.-Butylhydroperoxid. Besonders bevorzugt wird tert.-Butylhydroperoxid eingesetzt, welches sich beispielsweise durch katalytische Mengen an Eisen(II)-Ionen aktivieren lässt. Hierbei entstehen Hydroxidionen und tert.-Butoxid-Radikale. Die gebildeten Eisen(III)-Ionen lassen sich durch Reduktionsmittel wieder zu Eisen(II)-Ionen reduzieren. Als Reduktionsmittel ist beispielsweise Natriumformaldehydsulfoxilat geeignet. Bei hohen Restmonomerengehalten kann es erforderlich sein eine Nachpolymerisation unter erneuter Zugabe weiterer Initiatormengen durchzuführen.

Hierbei erweist sich als besonderer Vorteil des erfindungsgemäßen Verfahrens, dass es auch in Batch-Fahrweise durchgeführt werden kann. Im Übrigen können auch die in der deutschen Patentanmeldung DE 19628142 A1, Seite 4, Zeilen 6 bis 36, beschriebenen Fahrweise angewandt werden.

### Erfindungsgemäße Beschichtungsstoffe

Die erfindungsgemäßen Primärdispersionen dienen der Herstellung der erfindungsgemäßen Beschichtungsstoffe oder werden direkt als solche verwendet, was ein wesentlicher Vorteil der erfindungsgemäßen Primärdispersionen ist. Weiterer Gegenstand der vorliegenden Erfindung sind somit Beschichtungsmittelzusammensetzungen die aus den erfindungsgemäßen Primäremulsionen bestehen oder diese enthalten.

Die erfindungsgemäßen Beschichtungsstoffe sind bevorzugt pigmentierte Beschichtungsmittelzusammensetzungen, ganz besonders bevorzugt kathodisch abscheidbare Elektrotauchlacke. Für diese Verwendungszwecke kann den erfindungsgemäßen Primärdispersionen vor, während und/oder nach ihrer Herstellung noch mindestens ein übliches und bekanntes Lackadditiv in wirksamen Mengen zugesetzt werden. Hierbei werden vor oder während der Herstellung der erfindungsgemäßen Primärdispersionen nur solche Lackadditive zugesetzt, die die Miniemulsionspolymerisation nicht stören oder gar ganz inhibieren. Der Fachmann kann solche Lackadditive anhand seines allgemeinen Fachwissens identifizieren. Vorzugsweise werden die genannten Lackadditive nach der Herstellung der erfindungsgemäßen Primärdispersionen zugesetzt.

Beispiele geeigneter Lackadditive sind Pigmente, wie sie in "Römpp Lexikon Lacke und Druckfarben", Georg Thieme Verlag, 1998, Seiten 176, Effektpigmente; Seiten 380 und 381, Stichwort "Metalloxid-Glimmer-Pigmente" bis "Metallpigmente"; Seiten 180 und 181, "Eisenblau-Pigmente" bis "Eisenoxidschwarz" ; Seiten 451 bis 453, "Pigmente" bis "Pigmentsvolumenkonzentration"; Seite 563, "Thioindigo-Pigmente"; und Seite 567, "Titandioxid-Pigmente"; beschrieben werden. Diese Additive werden verwendet, wenn die erfindungsgemäßen Beschichtungsstoffe als Elektrotauchlacke, Füller, Unidecklacke oder Wasserbasislacke, insbesondere aber als Elektrotauchlacke, vorzugsweise im Rahmen des sogenannten Nass-in-Nass-Verfahrens (vgl. beispielsweise das europäische Patent EP 0 089 497 B1) zur Herstellung von Mehrschichtlackierungen verwendet werden. Sie entfallen naturgemäß, wenn die erfindungsgemäßen Beschichtungsstoffe als Klarlacke, beispielsweise im Rahmen des Nass-in-Nass-Verfahrens verwendet werden.

Weitere Beispiele geeigneter Additive sind organische und anorganische Füllstoffe, thermisch härtbare Reaktivverdünner, niedrig siedende und/oder hochsiedende organische Lösemittel, UV-Absorber, Lichtschutzmittel, Radikalfänger, thermolabile radikalische Initiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive oder Flammschutzmittel. Weitere Beispiele geeigneter Lackadditive werden in dem Lehrbuch Lackadditive von Johan Bieleman, Wiley-VCH, Weinheim, New York, 1998, beschrieben.

Sollen die erfindungsgemäßen Beschichtungsstoffe auch mit aktinischer Strahlung härtbar sein (Dual Cure), enthalten sie vorzugsweise Additive, die mit aktinischer Strahlung härtbar sind. Bei der aktinischen Strahlung kann es sich um elektromagnetische Strahlung wie nahes Infrarot (NIR), sichtbares Licht, UV-Licht oder Röntgenstrahlung oder um Korpuskularstrahlung wie Elektronenstrahlung handeln. Beispiele geeigneter mit aktinischer Strahlung härtbarer Additive sind aus dem deutschen Patent DE 197 09 467 C1 bekannt.

Methodisch weist die Applikation der erfindungsgemäßen Beschichtungsstoffe keine Besonderheiten auf, sondern kann durch alle üblichen Applikationsmethoden, wie Spritzen, Rakeln, Streichen, Gießen, Tauchen, Traufen oder Walzen oder mittels der Elektrotauchlackierung, insbesondere der kathodischen Elektrotauchlackierung erfolgen.

Als Substrate kommen alle zu lackierenden Oberflächen, die durch eine Härtung der hierauf befindlichen Lackierungen unter Anwendung von Hitze sowie gegebenenfalls von aktinischer Strahlung nicht geschädigt werden, in Betracht; das sind insbesondere Metalle, Kunststoffe, Holz, Keramik, Stein, Textilen, Faserverbunde, Leder, Glas, Glasfasern, Glas- und Steinwolle, mineral- und harzgebundene Baustoffe, wie Gips-und Zementplatten oder Dachziegel, sowie Verbunde dieser Materialien. Demnach ist der erfindungsgemäße Beschichtungsstoff auch für Anwendungen außerhalb der Automobillackierung geeignet. Hierbei kommt er insbesondere für die Lackierung von Möbeln und die industrielle Lackierung, inklusive Bandbeschichtung, Behälterbeschichtung und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können die erfindungsgemäßen Primärdispersionen oder die daraus erhältlichen erfindungsgemäßen Beschichtungsmittelzusammensetzungen vorzugsweise mittels der Elektrotauchlackierung, besonders bevorzugt der kathodischen Elektrotauchlackierung aufgebracht werden.

Weiterer Gegenstand der vorliegenden Erfindung ist daher eine Elektrotauchlackzusammensetzung (kurz auch als Elektrotauchlack bezeichnet), welche die erfindungsgemäßen Primärdispersionen umfasst. Eine solche Elektrotauchlackzusammensetzung ist insbesondere für die kathodische Elektrotauchlackierung (KTL) geeignet. Somit ist ein weiterer Gegenstand der vorliegenden Erfindung die Verwendung der erfindungsgemäßen Primärdispersionen zur Herstellung von Elektrotauchlackzusammensetzungen, insbesondere kathodisch abscheidbaren Elektrotauchlackzusammensetzungen.

Die erfindungsgemäßen Elektrotauchlacke weisen vorzugsweise einen Festkörpergehalt von 5 bis 50, bevorzugt 5 bis 35 Massen-% auf. Hierbei ist unter Festkörper der Anteil eines Elektrotauchlacks zu verstehen, der nach Trocknung bei 180 °C für 30 min zurückbleibt.

Die erfindungsgemäßen Elektrotauchlacke enthalten als Bindemittel mindestens die in den erfindungsgemäßen Primärdispersionen enthaltenen dispergierten Polymerpartikel sowie die erfindungsgemäß zur Herstellung der Primärdispersionen eingesetzten Emulgatoren (E) in freier und/oder in die Polymerpartikel einpolymerisierter Form. Unter dem Begriff "Bindemittel" wird hierin entsprechend der EN ISO 4618:2006 der nichtflüchtige Anteil einer Primärdispersion oder eines Beschichtungsmittels wie beispielsweise eines Elektrotauchlacks abzüglich der gegebenenfalls enthaltenen Füllstoffe und Pigmente verstanden.

Vorzugsweise enthalten die in den erfindungsgemäßen Primärdispersionen enthaltenen dispergierten Polymerpartikel bereits reaktive funktionelle Gruppen, die mit in obengenannten Vernetzungsmitteln vorhandenen komplementären reaktiven funktionellen Gruppen thermische Vernetzungsreaktionen eingehen können. Bereits oben genannte Beispiele geeigneter reaktiver funktioneller Gruppen sind Hydroxylgruppen, Thiolgruppen und primäre und sekundäre Aminogruppen, insbesondere Hydroxylgruppen.

Besonders bevorzugt enthalten die in den erfindungsgemäßen Primärdispersionen enthaltenden Polymerpartikel mindestens eine Art von kationischen und/oder potentiell kationischen Gruppen, die beispielsweise durch Einsatz der Monomere a2) oder Kohlenstoff-Kohlenstoff-Mehrfachbindungen tragender Emulgatoren (E) einpolymerisiert werden können. Potentiell kationische Gruppen sind beispielsweise zunächst ungeladene primäre, sekundäre oder tertiäre Aminogruppen, die durch Protonierung mit anorganischen oder vorzugsweise organischen Säuren in Ammoniumgruppen überführt werden können. Da kathodische Elektrotauchlacke üblicherweise einen pH-Wert von 4,5 bis 6,5 aufweisen, der üblicherweise durch Zusatz von Säuren eingestellt wird, ist der pH-Wert der Elektrotauchlacke in der Regel ausreichend um potentiell kationische Gruppen in kationsche Gruppen zu überführen. Beispiele geeigneter Säuren für die potentiell kationischen Gruppen sind anorganische und organische Säuren wie Schwefelsäure, Phosphorsäure, Ameisensäure, Essigsäure, Milchsäure, Propionsäure, alpha-Methylolpropionsäure, Dimethylolpropionsäure, gamma-Hydroxypropionsäure, Glykolsäure, Weinsäure, Äpfelsäure, Zitronensäure, Zuckersäuren, Salicylsäure, 2,4-Dihydroxybenzoesäure oder Sulfonsäuren, wie Amidosulfonsäuren und Alkansulfonsäuren, wie zum Beispiel Methansulfonsäure, insbesondere Ameisensäure, Essigsäure oder Milchsäure. Der Einsatz von Salzsäure ist nicht bevorzugt und in einer bevorzugten Ausführungsform ausgeschlossen.

Weitere Beispiele potentiell kationischer Gruppen, die durch Neutralisationsmittel und/oder Quaternisierungsmittel in Kationen überführt werden können, sind sekundäre Sulfidgruppen oder tertiäre Phosphingruppen. Besonders bevorzugt sind tertiäre Aminogruppen, wie sie insbesondere in den Emulgatoren (E) vorkommen.

Beispiele geeigneter kationischer Gruppen sind quarternäre Ammoniumgruppen, tertiäre Sulfoniumgruppen oder quarternäre Phosphoniumgruppen, vorzugsweise quarternäre Ammoniumgruppen oder tertiäre Sulfoniumgruppen, insbesondere aber quarternäre Ammoniumgruppen.

Neben den als zwingend eingesetztes Bindemittel dienenden dispergierten Polymerpartikeln der erfindungsgemäßen Primärdispersionen können weitere für Elektrotauchlacke typische Bindemittel im erfindungsgemäßen Elektrotauchlack enthalten sein. Weitere Bindemittel für Elektrotauchlacke sind aus den Druckschriften EP 0 082 291 A1 , EP 0 234 395 A1 , EP 0 227 975 A1 , EP 0 178 531 A1 , EP 0 333 327 , EP 0 310 971 A1 , EP 0 456 270 A1 , US 3,922,253 A, EP 0 261 385 A1 , EP 0 245 786 A1 , EP 0 414 199 A1, EP 0 476 514 A1 , EP 0 817 684 A1 , EP 0 639 660 A1 , EP 0 595 186 A1 , DE 41 26 476 A1 , WO 98/33835 , DE 33 00 570 A1 , DE 37 38 220 A1 , DE 35 18 732 A1 oder DE 196 18 379 A1 bekannt. Hierbei handelt es sich vorzugsweise um primäre, sekundäre, tertiäre oder quarternäre Amino- oder Ammoniumgruppen und/oder tertiäre Sulfoniumgruppen enthaltende Harze mit Aminzahlen vorzugsweise zwischen 20 und 250 mg KOH/g und einem gewichtsmittleren Molekulargewicht von 300 bis 10000 Dalton. Insbesondere werden Amino(meth)acrylatharze, Aminoepoxidharze, Aminopolyurethanharze, aminogruppenhaltige Polybutadienharze oder modifizierte Epoxidharz-Kohlendioxid-Amin-Umsetzungsprodukte verwendet. Ganz besonders bevorzugte Epoxy-Amin-Harze sind die aus der WO-A-2004/007443 bekannten und auch im experimentellen Teil der vorliegenden Erfindung eingesetzten Harze.

Als Vernetzungsmittel kommen alle üblichen und bekannten Vernetzungsmittel in Betracht, die geeignete komplementäre reaktive funktionelle Gruppen enthalten. Vorzugsweise werden die Vernetzungsmittel aus der bereits oben beschriebenen Gruppe der Vernetzungsmittel gewählt.

Die erfindungsgemäßen Elektrotauchlacke enthalten vorzugsweise Metallverbindungen, in welchen das Metall in Form eines Kations vorliegt, ganz besonders bevorzugt Bismutverbindungen. Derartige Metallverbindungen und insbesondere Bismutverbindungen sind ganz besonders bevorzugt dann enthalten, wenn die erfindungsgemäß enthaltenen Emulgatoren (E) in beta-Stellung zum Stickstoffatom in der allgemeinen Formel der Emulgatoren (E) eine Hydroxylgruppe, Thiolgruppe oder primäre oder sekundäre Aminogruppe tragen. Die in beta-Stellung befindlichen vorgenannten Gruppen begünstigen die Vernetzungsdichte der Beschichtung.

Darüber hinaus können die erfindungsgemäßen Elektrotauchlacke noch mindestens einen üblichen und bekannten Zusatzstoff, ausgewählt aus der Gruppe der bereits oben allgemein beschriebenen Additive, in wirksamen Mengen enthalten.

Vorzugsweise werden Pigmente. Bevorzugt werden die Pigmente aus der Gruppe, bestehend aus üblichen und bekannten farbgebenden, effektgebenden, elektrisch leitfähigen, magnetisch abschirmenden, fluoreszierenden, füllenden und korrosionshemmenden organischen und anorganischen Pigmenten, ausgewählt.

Die erfindungsgemäßen Elektrotauchlacke werden durch Vermischen der vorgenannten Bestandteile hergestellt. Die Bestandteile können homogenisiert werden. Gegebenenfalls können die erfindungsgemäßen Elektrotauchlacke mit Hilfe üblicher und bekannter Mischverfahren und Vorrichtungen wie Rührkesseln, Rührwerksmühlen, Extruden, Knetern, Ultraturrax-Apparaten, Inline-Dissolvern, statischen Mischern, Mikromischern, Zahnkranzdispergatoren, Druckentspannungsdüsen und/oder Microfluidizern hergestellt werden.

Die erfindungsgemäßen Elektrotauchlacke werden insbesondere zur kathodischen Tauchlackierung verwendet. Die erfindungsgemäßen Elektrotauchlacke können üblicherweise auf elektrisch leitfähigen, beispielsweise elektrisch leitfähigen oder leitfähig gemachten, beispielsweise durch Metallisierung elektrisch leitfähig gemachten Kunststoffsubstraten oder insbesondere metallischen Substraten kathodisch abgeschieden werden. Die Erfindung betrifft daher auch das Verfahren zur kathodischen Abscheidung der erfindungsgemäßen Elektrotauchlacke auf derartigen Substraten. Weiterhin lassen sich die erfindungsgemäßen Elektrotauchlacke zur Herstellung von Grundierungsschichten durch kathodische Tauchlackierung von Substraten mit elektrisch leitfähigen Oberflächen verwenden.

Als metallische Substrate können Teile aus sämtlichen üblichen Metallen, beispielsweise die in der Automobilindustrie üblichen Metallteile, insbesondere Automobilkarossen und deren Teile, eingesetzt werden. Demnach können die erfindungsgemäßen Elektrotauchlacke auch bei der Lackierung von Kraftfahrzeugen oder deren Teilen verwendet werden.

Auch die Härtung der applizierten erfindungsgemäßen Beschichtungsstoffe beziehungsweise Elektrotauchlacke weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die mit einer kathodischen Elektrotauchlackschicht beschichteten elektrisch leitfähigen Substrate, welche ebenfalls Gegenstand der vorliegenden Erfindung sind, lassen sich mit einer oder mehreren weiteren Lackschichten wie beispielsweise einer oder mehreren Füllerlackschichten, einer oder mehreren Basislackschichten und/oder einer oder mehreren Klarlackschichten beschichten. Derartige Lackaufbauten sind insbesondere aus der Automobillackierung bekannt. In anderen Bereichen kann jedoch auch bereits das Aufbringen einer erfindungsgemäßen Elektrotauchlackschicht ausreichen.

Im Folgenden soll die Erfindung durch Beispiele näher erläutert werden.

### Ausführungsbeispiele

### Herstellung des erfindungsgemäßen Emulgators E1

1417,2 Teile Cardolite NC 513 (EEW 532 g/eq) werden in einem Reaktionsgefäß, ausgestattet mit Rührer, Rückflusskühler, Temperatursonde, Stickstoff-Einlass und Tropftrichter auf 70°C unter Rühren erwärmt. Dann werden 282,9 Teile Diethanolamin über 15 Minuten hinzugetropft. Es wird anschließend so lange gerührt, bis alle NH-Äquivalente umgesetzt sind und ein Epoxy-Amin-Wert (eine Kennzahl, welche die Stoffmengen von Epoxidgruppen und von Aminogruppen zusammen wiedergibt) von 1,57 mmol/g erreicht ist. Sobald die Mischung auf 30°C abgekühlt ist, werden 300 Teile 80%ige Milchsäure langsam hinzugetropft und für 30 Minuten bei Raumtemperatur gerührt.

### Herstellung des erfindungsgemäßen Emulgators E2

### Herstellung eines Adduktes aus Diethylentriamin und ε-Caprolacton:

456,0 Teile ε-Caprolacton werden zusammen mit 206,0 Teilen Diethylentriamin in einem Reaktionsgefäß, ausgestattet mit Rührer, Rückflusskühler, Temperatursonde und Stickstoff-Einlass vorgelegt und auf 80°C unter Rühren erwärmt. Nach 4 Stunden werden weitere 50,0 Teile ε-Caprolacton hinzugefügt und für 2 Stunden gerührt bevor die Temperatur auf 110°C erhöht wird. Anschließend wird so lange gerührt, bis alle primären Amin-Gruppen umgesetzt sind und ein MEQ-Base-Wert von 2,80 mmol/g erreicht ist, mindestens jedoch noch für weitere 3 Stunden.

### Herstellung des Emulgators E2:

532,0 Teile Cardolite NC 513 (EEW 532 g/eq) werden mit 357,1 Teilen des oben hergestellten Adduktes aus Diethylentriamin und ε-Caprolacton in einem Reaktionsgefäß, bestückt mit Rührer, Rückflusskühler, Temperatursonde und Stickstoffeinlass auf 80°C unter Rühren erwärmt, bis alle NH-Äquivalente umgesetzt sind und ein Epoxy-Amin-Wert von 1,12 mmol/g erreicht ist, mindestens jedoch für zwei Stunden. Anschließend werden 93,4 Teile 90%ige Milchsäure hinzugegeben und für 30 Minuten bei 80°C gerührt.

### Herstellung einer mittels eines Epoxy-Amin-Adduktes hybridstabilisierten Miniemulsion M1 und deren in-situ-Polymerisation:

### Herstellung eines Epoxy-Amin-Monoadduktes EA1:

265,0 Teile Epikote 1001 (EEW 475 g/eq) werden mit 159,7 Teilen Styrol in einem Reaktionsgefäß, bestückt mit Rührer, Rückflusskühler, Temperatursonde und Stickstoff-Einlass auf 60°C unter Rühren erwärmt. Dann werden 29,7 Teile Diethanolamin so zugetropft, dass die Temperatur 70°C nicht überschreitet. Es wird anschließend solange gerührt, bis alle NH-Äquivalente umgesetzt sind und ein Epoxy-Amin-Wert von 1,21 mmol/g erreicht ist.

### Herstellung der Monomermischung:

Zu EA1 werden bei Raumtemperatur 28,9 Teile Isobornylmethacrylat, 155,1 Teile Methylmethacrylat, 133,7 Teile Butylacrylat, 18,5 Teile Hydroxyethylmethacrylat, 140,8 Teile Araldit GY 2600 (EEW 186 g/eq), 256,5 Teile eines Vernetzers basierend auf einem Diphenylmethandiisocyanat-Oligomer, das mit Propylengykol und Butyldiglykol verkappt wurde und 90 %ig in einem 1/1 (w/w) Gemisch bestehend aus Butoxypropanol und Phenoxypropanol vorliegt (CathoGuard® 500 Vernetzer, Verkaufsprodukt der BASF Coatings GmbH), 3,0 Teile tert-Dodecylmercaptan und 217,7 Teile des Emulgators E1 hinzugefügt und so lange gerührt bis eine Lösung vorliegt. Danach werden 27,5 Teile einer 80%igen Milchsäure hinzugefügt und 10 Minuten bei Raumtemperatur verrührt. Dann werden 2346,8 Teile vollentsalztes Wasser unter kräftigem Rühren langsam hinzugefügt. Die entstandene Grobemulsion wird anschließend noch für mindestens 5 Minuten gerührt.

### Herstellung der Miniemulsion:

Die Grobemulsion wird in eine Apparatur zum Eintragen hoher Scherkräfte überführt und anschließend passagenweise zweimal bei 600 bar mit einem Hochdruckhomogenisator (Modell 110Y der Firma Microfluidics, ausgestattet mit je einer H230Z und H210Z Homogenisierungskammer) homogenisiert.

### In-situ Polymerisation der Miniemulsion zur Herstellung einer erfindungsgemäßen Primärdispersion:

Die Miniemulsion wird danach in einem Reaktionsgefäß, bestückt mit Rührer, Rückflusskühler, Temperatursonde, Stickstoff-Einlass und Zudosierungseinheit auf 75°C unter Rühren erwärmt. Bei 75°C werden 0,7 Teile einer 1%igen Eisen(II)sulfatLösung hinzugegeben und eine Lösung von 3,75 Teilen Natriumformaldehydsulfoxylat-Dihydrat in 110,9 Teilen vollentsalztem Wasser zusammen mit einer Lösung von 5,2 Teilen einer 70%igen tert-Butylhydroperoxid-Lösung in 97,1 Teilen vollentsalztem Wasser gleichmäßig über einen Zeitraum von eineinhalb Stunden hinzugetropft. Anschließend wird noch für eine Stunde bei 75°C gerührt, bevor die in-situ polymerisierte Miniemulsion auf Raumtemperatur abgekühlt und filtriert wird (Nylonfilterbeutel mit 80 µm cut-off).

Teilchengröße (Z-mittel): 104 nm
PDI (Particle distribution index, Teilchenverteilungs-Index): 0,15
Festkörper (Trocknung für 30 Minuten bei 180°C): 32,7 Gew.-%
Die Teilchengrößenverteilung wird in allen Beispielen durch dynamische Lichtstreuung unter Verwendung eines Zetasizers Nano S der Firma Malvern bestimmt. Aus dieser Messung wird auch der Wert des PDI abgeleitet.

### Herstellung einer mittels eines aminofunktionalisierten ethylenisch ungesättigten Monomers hybridstabilisierten Miniemulsion M2 und deren in-situ-Polymerisation:

### Herstellung der Monomermischung:

25,3 Teile Isobornylmethacrylat, 135,7 Teile Methylmethacrylat, 117,0 Teile Butylacrylat, 16,2 Teile Hydroxyethylmethacrylat, 139,7 Teile Styrol, 353,7 Teile Araldit GY 2600 (EEW 186 g/eq), 55,1 Teile "Super Iso Stable" (Toluoldiisocyanat-Trimethylolpropan-Addukt, blockiert mit 3 Äquivalenten Phenol, Verkaufsprodukt der Firma Super Urecoat Industries), 2,6 Teile tert-Dodecylmercaptan und 126,0 Teile des Emulgators E1 werden solange in einem Gefäß gerührt, bis eine Lösung vorliegt. Danach wird eine Lösung, bestehend aus 80,3 Teilen Diethylaminoethylmethacrylat, 19,9 Teilen Ameisensäure und 1738,4 Teilen vollentsalztem Wasser unter kräftigem Rühren langsam hinzugefügt. Die entstandene Grobemulsion wird anschließend noch für mindestens 5 Minuten gerührt.

### Herstellung der Miniemulsion:

Die Grobemulsion wird in eine Apparatur zum Eintragen hoher Scherkräfte überführt und anschließend passagenweise zweimal bei 600 bar mit einem Hochdruckhomogenisator (Modell 110Y der Firma Microfluidics ausgestattet mit je einer H230Z und H210Z Homogenisierungskammer) homogenisiert.

### In-situ Polymerisation der Miniemulsion zur Herstellung einer erfindungsgemäßen Primärdispersion:

Die Miniemulsion wird danach in einem Reaktionsgefäß, bestückt mit Rührer, Rückflusskühler, Temperatursonde, Stickstoff-Einlass und Zudosierungseinheit auf 75°C unter Rühren erwärmt. Bei 75°C werden 0,6 Teile einer 1%igen Eisen(II)sulfatLösung hinzugegeben und eine Lösung von 3,3 Teilen Natriumformaldehydsulfoxylat-Dihydrat in 97,0 Teilen vollentsalztem Wasser zusammen mit einer Lösung von 4,6 Teilen einer 70%igen tert-Butylhydroperoxid-Lösung in 84,9 Teilen vollentsalztem Wasser gleichmäßig über einen Zeitraum von eineinhalb Stunden hinzugetropft. Anschließend wird noch für eine Stunde bei 75°C gerührt, bevor die in-situ polymerisierte Miniemulsion auf Raumtemperatur abgekühlt und filtriert wird (Nylonfilterbeutel mit 80 µm cut-off).

Teilchengröße (Z-mittel): 274 nn
PDI: 0,24
Festkörper (Trocknung für 30 Minuten bei 180°C): 31,1%

### Herstellung einer mit dem Emulgator E2 stabilisierten Miniemulsion M3 und deren in-situ-Polymerisation:

### Herstellung der Monomermischung:

22,9 Teile Isobornylmethacrylat, 123,0 Teile Methylmethacrylat, 106,0 Teile Butylacrylat, 14,7 Teile Hydroxyethylmethacrylat, 126,7 Teile Styrol, 320,8 Teile Araldit GY 2600 (EEW 186 g/eq), 50,0 Teile "Super Iso Stable" (Toluoldiisocyanat-Trimethylolpropan-Addukt, geblockt mit 3 Äquivalenten Phenol, Verkaufsprodukt der Firma Super Urecoat Industries), 2,4 Teile tert-Dodecylmercaptan und 159,5 Teile des Emulgators E2 werden solange in einem Gefäß gerührt, bis eine Lösung vorliegt. Danach werden 1576,8 Teile vollentsalztes Wasser unter kräftigem Rühren langsam hinzugefügt. Die entstandene Grobemulsion wird anschließend noch für mindestens 5 Minuten gerührt.

### Herstellung der Miniemulsion:

Die Grobemulsion wird in eine Apparatur zum Eintragen hoher Scherkräfte überführt und anschließend passagenweise zweimal bei 600 bar mit einem Hochdruckhomogenisator (Modell 110Y der Firma Microfluidics ausgestattet mit je einer H230Z und H210Z Homogenisierungskammer) homogenisiert.

### In-situ Polymerisation der Miniemulsion:

Die Miniemulsion wird danach in einem Reaktionsgefäß, bestückt mit Rührer, Rückflusskühler, Temperatursonde, Stickstoff-Einlass und Zudosierungseinheit auf 75°C unter Rühren erwärmt. Bei 75°C werden 0,6 Teile einer 1%igen Eisen(II)sulfatLösung hinzugegeben und eine Lösung von 3,0 Teilen Natriumformaldehydsulfoxylat-Dihydrat in 88,0 Teilen vollentsalztes Wasser zusammen mit einer Lösung von 4,1 Teilen einer 70%igen tert-Butylhydroperoxid-Lösung in 77,0 Teilen vollentsalztem Wasser gleichmäßig über einen Zeitraum von eineinhalb Stunden hinzugetropft. Anschließend wird noch für eine Stunde bei 75°C gerührt, bevor die in-situ polymerisierte Miniemulsion auf Raumtemperatur abgekühlt und filtriert wird (Nylonfilterbeutel mit 80 µm cut-off).

Teilchengröße (Z-mittel): 82 nm
PDI: 0,07
Festkörper (Trocknung für 30 Minuten bei 180°C): 31,5%

### Herstellung einer nicht-erfindungsgemäßen Miniemulsion in Anlehnung an Beispiel 12-1 aus WO 82/00148 und deren in-situ-Polymerisation:

### Herstellung der Monomermischung:

132,0 Teile Methylmethacrylat, 88,0 Teile Butylacrylat, 27,0 Teile Hydroxyethylmethacrylat, 160,0 Teile eines Bisphenol A-diglycidylethers (Epikote 828 (EEW 186 g/eq)), 88,0 Teile eines Vernetzers basierend auf einem Diphenylmethandiisocyanat-Oligomer, das mit Propylengykol und Butyldiglykol verkappt wurde und 90 %ig in einem 1/1 (w/w) Gemisch bestehend aus Butoxypropanol und Phenoxypropanol vorliegt (CathoGuard® 500 Vernetzer, Verkaufsprodukt der BASF Coatings GmbH) und 20,0 Teile Ethoduomeen T/13 (Reaktionsprodukt aus 3 mol Ethylenoxid und N-Alkyl-1,3-diaminopropan basierend auf einem Talgfett-Alkylrest, Verkaufsprodukt der Firma AkzoNobel N.V.) werden solange in einem Gefäß gerührt, bis eine Lösung vorliegt. Danach wird eine Lösung aus 1200,0 Teilen vollentsalztes Wasser und 64,0 Teilen Duomac T (N-Alkyl-1,3-diaminopropandiacetat basierend auf einem Talgfett-Alkylrest, Verkaufsprodukt der Firma AkzoNobel N.V.) unter kräftigem Rühren langsam hinzugefügt. Die entstandene Grobemulsion wird anschließend noch für mindestens 5 Minuten gerührt.

### Herstellung der Miniemulsion:

Die Grobemulsion wird in eine Apparatur zum Eintragen hoher Scherkräfte überführt und anschließend passagenweise zweimal bei 600 bar mit einem Hochdruckhomogenisator (Modell 110Y der Firma Microfluidics ausgestattet mit je einer H230Z und H210Z Homogenisierungskammer) homogenisiert.

### In-situ Polymerisation der Miniemulsion:

Die Miniemulsion wird danach in einem Reaktionsgefäß, bestückt mit Rührer, Rückflusskühler, Temperatursonde, Stickstoff-Einlass und Zudosierungseinheit auf 75°C unter Rühren erwärmt. Bei 75°C werden 0,6 Teile einer 1%igen Eisen(II)sulfatLösung hinzugegeben und eine Lösung von 3,0 Teilen Natriumformaldehydsulfoxylat-Dihydrat in 88,0 Teilen vollentsalztes Wasser zusammen mit einer Lösung von 4,1 Teilen einer 70%igen tert-Butylhydroperoxid-Lösung in 77,0 Teilen vollentsalztes Wasser gleichmäßig über einen Zeitraum von eineinhalb Stunden hinzugetropft. Anschließend wird noch für eine Stunde bei 75°C gerührt, bevor die in-situ polymerisierte Miniemulsion auf Raumtemperatur abgekühlt und filtriert wird (Nylonfilterbeutel mit 80 µm cut-off).

Teilchengröße (Z-mittel): 111 nm
PDI: 0,12
Festkörper (Trocknung für 30 Minuten bei 180°C): 28,8%

### Eigenschaftstests der Minisuspensionen:

### Herstellung eines Beschichtungsmittelbades aus der Miniemulsion M1:

Herstellung einer wässrigen Zubereitung zur Überprüfung der Dispersionsstabilität: 1898,7 Teile der Miniemulsion M1 werden mit 1909,3 Teilen vollentsalztes Wasser vermischt. Anschließend werden 192,0 Teile einer wässrigen Pigmentzubereitung (CathoGuard® 520 Pigmentpaste Verkaufsprodukt der Firma BASF Coatings GmbH) unter Rühren hinzugefügt. Das fertige Bad wird noch für mindestens 24 Stunden gerührt, bevor es überprüft wird.

### Pumptest:

Die Pumpbarkeit des oben hergestellten Bades wird mittels 24stündigen Pumpens im Kreislauf durch eine magnetgekoppelte Kreiselpumpe des Typs Little Giant MD 4 bei 32°C überprüft. Anschließend wird der Siebrückstand (25µm Maschenweite) nach Einbrennen bei 180°C für 30 Minuten bestimmt. Dabei wird eine ausreichende Pumpbarkeit bei einem Siebrückstand < 200 mg/L angenommen.

Nach erfolgtem Test, wurde ein Siebrückstand von 16 mg/L gefunden.

### Ultrafiltrationstest:

Die Ultrafiltration des oben hergestellten Bades wird über ein Plattenmodul mit PVDF-Membranen einer Gesamtfläche von 880 cm² (150 kDa cut-off, Verkaufsprodukt der Firma Microdyn-Nadir GmbH) durchgeführt. Zur Beurteilung der Ultrafiltrierbarkeit wird die Fluxleistung sowie der Ein- und Ausgangsdruck über einen Zeitraum von mindestens einer Woche bestimmt. Dabei wird von einer ausreichenden Ultrafiltrierbarkeit ausgegangen, wenn die Fluxleistung, bei einer Mindestleistung von 10 L/hm², über den getesteten Zeitraum um weniger als 20% abnimmt, wobei die Abnahme nicht kontinuierlich erfolgen darf. Während des Tests wurden folgende Kenndaten des obigen Bades ermittelt:

**Tabelle 1 - Ultrafiltrationskenndaten**

| **Dauer [h]** | **Fluxleistung [L/hm²]** | **Änderung im Vergleich zum Beginn [%]** | **Eingangsdruck [bar]** | **Ausgangsdruck [bar]** | **Temperatur [°C]** |
|---|---|---|---|---|---|
| 0 | 23,50 | 0,0 | 2 | 0,7 | 22 |
| 17,25 | 23,90 | 1,7 | 1,9 | 0,7 | 29 |
| 23,25 | 23,70 | 0,9 | 1,9 | 0,7 | 28,8 |
| 89,45 | 23,80 | 1,3 | 1,9 | 0,7 | 26,9 |
| 114,7 | 24,10 | 2,6 | 1,9 | 0,7 | 28,6 |
| 120,2 | 23,80 | 1,3 | 1,9 | 0,7 | 29,1 |
| 138,7 | 23,80 | 1,3 | 1,9 | 0,7 | 27,8 |
| 161,2 | 23,60 | 0,4 | 1,9 | 0,7 | 27,6 |

Die Fluxleistung blieb über den Testzeitraum nahezu konstant.

### Herstellung eines Beschichtungsmittelbades aus der Miniemulsion M2:

Herstellung einer wässrigen Zubereitung zur Überprüfung der Dispersionsstabilität: 1929,3 Teile der Miniemulsion M2 werden mit 1878,7 Teilen vollentsalztes Wasser vermischt. Anschließend werden 192,0 Teile einer wässrigen Pigmentzubereitung (CathoGuard® 520 Pigmentpaste Verkaufsprodukt der Firma BASF Coatings GmbH) unter Rühren hinzugefügt. Das fertige Bad wird noch für mindestens 24 Stunden gerührt, bevor es überprüft wird.

### Pumptest:

Die Durchführung erfolgt wie oben bereits beschrieben.

Nach erfolgtem Test, wurde ein Siebrückstand von 38 mg/L gefunden.

### Ultrafiltrationstest:

Die Durchführung erfolgte wie oben bereitsbeschrieben. Während des Tests wurden folgende Kenndaten ermittelt.

**Tabelle 2 - Ultrafiltrationskenndaten**

| **Dauer [h]** | **Fluxleistung [L/hm²]** | **Änderung im Vergleich zum Beginn [%]** | **Eingangsdruck [bar]** | **Ausgangsdruck [bar]** | **Temperatur [°C]** |
|---|---|---|---|---|---|
| 0 | 14,24 | 0 | 2 | 0,1 | 23,7 |
| 2,5 | 14,89 | 5 | 1,8 | 0,1 | 25,7 |
| 6 | 15,20 | 7 | 1,65 | 0,1 | 26,9 |
| 22 | 13,96 | -2 | 1,6 | 0,1 | 25,3 |
| 26,5 | 14,21 | 0 | 1,6 | 0,1 | 27,1 |
| 30,5 | 14,24 | 0 | 1,55 | 0,1 | 29,1 |
| 48 | 14,39 | 1 | 1,5 | 0,1 | 27 |
| 52 | 14,74 | 4 | 1,5 | 0,1 | 27,1 |
| 71 | 14,80 | 4 | 1,45 | 0,1 | 27,8 |
| 77,5 | 15,53 | 9 | 1,4 | 0,1 | 28 |
| 96,5 | 16,02 | 13 | 1,45 | 0,1 | 28,2 |
| 101,5 | 16,27 | 14 | 1,4 | 0,1 | 28 |
| 170,5 | 17,67 | 24 | 1,4 | 0,1 | 29,1 |

Die Fluxleistung nahm zum Ende des Tests im Vergleich zum Beginn um 24% zu.

### Herstellung eines Beschichtungsmittelbades aus Vergleichsbeispiel 12-1:

Herstellung einer wässrigen Zubereitung zur Überprüfung der Dispersionsstabilität: 1991,5 Teile der Miniemulsion aus Vergleichsbeispiel 12-1 aus WO 82/00148 werden mit 1816,5 Teilen vollentsalztes Wasser vermischt. Anschließend werden 192,0 Teile einer wässrigen Pigmentzubereitung (CathoGuard® 520 Pigmentpaste Verkaufsprodukt der Firma BASF Coatings GmbH) unter Rühren hinzugefügt. Das fertige Bad wird noch für mindestens 24 Stunden gerührt, bevor es überprüft wird.

### Pumptest:

Bei diesem Bad wurde bereits visuell eine nicht ausreichende Pumpbarkeit festgestellt, da sich im Spalt zwischen Pumpengehäuse und Schaufelkörper Koagulat in großer Menge (deutlich > 1 g/L) festgesetzt hat.

### Ultrafiltrationstest:

Auf Grund des nicht bestandenen Pumpentests wurde kein Ultrafiltrationsversuch mehr durchgeführt.

## Patentansprüche

1. Wässrige, kationisch stabilisierte Primärdispersion, umfassend
(1) dispergierte Polymerpartikel enthaltend mindestens eine Art von kationischen Gruppen, die
i. einen Z-mittleren Teilchendurchmesser von 5 bis 500 nm besitzen, und
ii. erhältlich sind durch Emulsionspolymerisation wenigstens eines olefinisch ungesättigten Monomers (A), wobei die Emulsionspolymerisation in Gegenwart eines oder mehrerer Emulgatoren (E) erfolgt, die folgende allgemeine Formel besitzen:
R¹-N(R²)(R³),
worin
R¹ ein mindestens eine aromatische Gruppe und mindestens eine aliphatische Gruppe enthaltender Rest mit 15 bis 40 Kohlenstoffatomen ist, der mindestens eine funktionelle Gruppe gewählt aus Hydroxylgruppen, Thiolgruppen und primären oder sekundären Aminogruppen enthält und mindestens eine Kohlenstoff-Kohlenstoff-Mehrfachbindung aufweist, wobei der Rest R¹- die Struktur Grₐₗᵢ₁-Grₐᵣₒₘ-Grₐₗᵢ₂- besitzt, worin Grₐᵣₒₘ für eine aromatische Gruppe, Grₐₗᵢ₁ für eine erste aliphatische Gruppe und Grₐₗᵢ₂ für eine zweite aliphatische Gruppe steht und wobei der Rest R¹ in der aliphatischen Gruppe Grₐₗᵢ₁ die mindestens eine Kohlenstoff-Kohlenstoff-Mehrfachbindung und in der aliphatischen Gruppe Grₐₗᵢ₂ die mindestens eine funktionelle Gruppe gewählt aus Hydroxylgruppen, Thiolgruppen und primären oder sekundären Aminogruppen aufweist, und
R² und R³ unabhängig voneinander gleiche oder verschiedene, aliphatische Reste mit 1 bis 14 Kohlenstoffatomen sind.

2. Wässrige, kationisch stabilisierte Primärdispersion nach Anspruch 1, wobei Rest R¹ in der aliphatischen Gruppe Grₐₗᵢ₂ eine funktionelle Gruppe gewählt aus Hydroxylgruppen, Thiolgruppen und primären oder sekundären Aminogruppen in beta-Position zum Stickstoffatom der allgemeinen Formel des Emulgators gemäß Anspruch 1 aufweist.

3. Wässrige, kationisch stabilisierte Primärdispersion nach einem der Ansprüche 1 bis 2, wobei
Grₐₗᵢ₁ linear, unsubstituiert und heteroatomfrei ist und eine bis drei Doppelbindungen aufweist,
Grₐᵣₒₘ eine Phenylen- oder Naphthylen-Gruppe ist, und
Grₐₗᵢ₂ linear ist, eine Hydroxylgruppe in beta-Position zum Stickstoffatom der allgemeinen Formel des Emulgators (E) und zusätzlich als Heteroatom O, in Form einer Ethergruppe enthält.

4. Wässrige, kationisch stabilisierte Primärdispersion nach einem der Ansprüche 1 bis 3, wobei die Reste R² und/oder R³ neben Hydroxyl-, Thiol- primären und sekundären Aminogruppen mindestens eine weitere funktionelle Gruppe gewählt aus Ethergruppen, Estergruppen und Amidgruppen tragen.

5. Wässrige, kationisch stabilisierte Primärdispersionen nach einem der Ansprüche 1 bis 4, wobei eine Mischung aus Emulgatoren (E) eingesetzt wird in welcher mehr als 50 mol-% der Reste R¹ Kohlenstoff-Kohlenstoff-Mehrfachbindungen enthalten.

6. Wässrige, kationisch stabilisierte Primärdispersion nach einem der Ansprüche 1 bis 5, wobei das olefinisch ungesättigte Monomer (A) gewählt ist aus der Gruppe bestehend aus
a1) säuregruppenfreien (Meth)acrylsäureestern;
a2) Monomeren, welche mindestens eine Hydroxylgruppe, eine primäre, sekundäre, tertiäre oder quaternisierte Aminogruppe, eine Alkoxymethylaminogruppe oder Iminogruppe pro Molekül tragen, säuregruppenfrei sind, und von den Emulgatoren (E) verschieden sind;
a3) Monomeren, welche mindestens eine Säuregruppe, die in die entsprechende Säureaniongruppe überführbar ist, pro Molekül tragen;
a4) Vinylestern von in alpha-Stellung verzweigten Monocarbonsäuren mit 5 bis 18 Kohlenstoffatomen im Molekül;
a5) Umsetzungsprodukten aus Acrylsäure und/oder Methacrylsäure mit dem Glycidylester einer in alpha-Stellung verzweigten Monocarbonsäure mit 5 bis 18 Kohlenstoffatomen je Molekül;
a6) cyclischen oder acyclischen Olefinen;
a7) (Meth)acrylsäureamiden;
a8) Epoxidgruppen enthaltenden Monomeren;
a9) vinylaromatischen Kohlenwasserstoffen;
a10) Acrylnitril oder Methacrylnitril;
a11) Vinylverbindungen gewählt aus der Gruppe der Vinylhalogenide, Vinylidendihalogenide, N-Vinylamide, Vinylether und von den Monomeren a4) verschiedenen Vinylester;
a12) Allylverbindungen;
a13) Polysiloxanmakromonomere, die ein zahlenmittleres Molekulargewicht Mₙ von 1000 bis 40000 und im Mittel 0,5 bis 2,5 ethylenisch ungesättigte Doppelbindungen pro Molekül aufweisen; und
a14) Acryloxysilan-enthaltende Vinylmonomere.

7. Wässrige, kationisch stabilisierte Primärdispersion nach Anspruch 6, wobei das olefinisch ungesättigte Monomere (A) gewählt ist aus der Gruppe der Monomere a1), a2) und a9) sowie deren Mischungen.

8. Wässrige, kationisch stabilisierte Primärdispersion nach einem der Ansprüche 6 bis 7, wobei eine Mischung olefinisch ungesättigter Monomere (A) eingesetzt wird, umfassend
Monomere a1) gewählt aus der Gruppe der (Meth)acrylsäurealkylester oder (Meth)acrylsäurecycloalkylester mit bis zu 20 Kohlenstoffatomen im Alkyl- oder Cycloalkylrest,
Monomere a2) gewählt aus der Gruppe bestehend aus Monomeren, welche mindestens eine Hydroxylgruppe, eine primäre, sekundäre, tertiäre oder quaternisierte Aminogruppe tragen, und als
Monomere a9) Styren.

9. Verfahren zur Herstellung wässriger kationisch stabilisierter Primärdispersionen gemäß einem oder mehreren der Ansprüche 1 bis 8, wobei
(1) das oder die olefinisch ungesättigten Monomere (A) und der oder die Emulgatoren (E) sowie gegebenenfalls Vernetzungsmittel und/oder weitere Bindemittel in ein wässriges Medium eingebracht werden,
(2) sodann durch Einwirken von Scherkräften in eine Miniemulsion überführt werden, und
(3) eine Emulsionspolymerisation durchgeführt wird.

10. Verfahren nach Anspruch 9, wobei als Vernetzungsmittel eines oder mehrere Vernetzungsmittel aus der Gruppe bestehend aus blockierten Polyisocyanaten, Tris(alkoxycarbonylamino)triazinen und vollständig veretherten Aminoplastharzen eingesetzt wird.

11. Beschichtungsmittelzusammensetzungen, umfassend oder bestehend aus einer wässrigen, kationisch stabilisierten Primärdispersion gemäß einem der Ansprüche 1 bis 8.

12. Beschichtungsmittelzusammensetzung gemäß Anspruch 11, wobei es sich um eine Elektrotauchlackzusammensetzung handelt.

13. Verwendung einer wässrigen, kationisch stabilisierten Primärdispersion nach einem der Ansprüche 1 bis 8 zur Herstellung von Elektrotauchlackzusammensetzungen.

## Claims

1. An aqueous, cationically stabilized primary dispersion, comprising
(1) dispersed polymer particles containing at least one type of cationic groups, which particles
i. have a number average particle diameter of from 5 to 500 nm, and
ii. are obtainable by emulsion polymerization of at least one olefinically unsaturated monomer (A), wherein the emulsion polymerization takes place in the presence of one or more emulsifiers (E) which have the following general formula:
R¹-N(R²)(R³),
where
R¹ is a group which contains at least one aromatic group and at least one aliphatic group, has 15 to 40 carbon atoms, contains at least one functional group selected from hydroxyl groups, thiol groups and primary or secondary amino groups and has at least one carbon-carbon multiple bond, wherein the group R¹ has the structure Grₐₗᵢ₁-Grₐᵣₒₘ-Grₐₗᵢ₂-, where Grₐᵣₒₘ represents an aromatic group, Grₐₗᵢ₁ represents a first aliphatic group and Grₐₗᵢ₂ represents a second aliphatic group and wherein the group R¹ in the aliphatic group Grₐₗᵢ₁ has the at least one carbon-carbon multiple bond and in the aliphatic group Grₐₗᵢ₂ has the at least one functional group selected from hydroxyl groups, thiol groups and primary or secondary amino groups, and
R² and R³ are, independently of one another, the same or different aliphatic groups having 1 to 14 carbon atoms.

2. The aqueous, cationically stabilized primary dispersion according to claim 1, wherein the group R¹ in the aliphatic group Grₐₗᵢ₂ has a functional group selected from hydroxyl groups, thiol groups and primary or secondary amino groups in the beta position to the nitrogen atom of the general formula of the emulsifier according to claim 1.

3. The aqueous, cationically stabilized primary dispersion according to one of claims 1 to 2, wherein
Grₐₗᵢ₁ is linear, unsubstituted and heteroatom-free and has one to three double bonds,
Grₐᵣₒₘ is a phenylene or naphthylene group, and
Grₐₗᵢ₂ is linear and contains a hydroxyl group in the beta position to the nitrogen atom of the general formula of the emulsifier (E) and additionally as a heteroatom O in the form of an ether group.

4. The aqueous, cationically stabilized primary dispersion according to one of claims 1 to 3, wherein the groups R² and/or R³, in addition to hydroxyl groups, thiol groups, and primary and secondary amino groups, carry at least one additional functional group selected from ether groups, ester groups and amide groups.

5. The aqueous, cationically stabilized primary dispersion according to one of claims 1 to 4, wherein a mixture of emulsifiers (E) is used in which more than 50 mol.% of the groups R¹ contain carbon-carbon multiple bonds.

6. The aqueous, cationically stabilized primary dispersion according to one of claims 1 to 5, wherein the olefinically unsaturated monomer (A) is selected from the group consisting of:
a1) acid group-free (meth)acrylic acid esters;
a2) monomers which carry at least one hydroxyl group, one primary, secondary, tertiary or quaternized amino group, one alkoxymethyl amino group or imino group per molecule, are acid group-free and are different from the emulsifiers (E);
a3) monomers which carry at least one acid group, which can be converted into the corresponding acid anion group, per molecule;
a4) vinyl esters of monocarboxylic acids that are branched in the alpha position and have 5 to 18 carbon atoms in the molecule;
a5) reaction products of acrylic acid and/or methacrylic acid with the glycidyl ester of a monocarboxylic acid that is branched in the alpha position and has 5 to 18 carbon atoms per molecule;
a6) cyclic or acyclic olefins;
a7) (meth)acrylic acid amides;
a8) epoxide group-containing monomers;
a9) vinylaromatic hydrocarbons;
a10) acrylonitrile or methacrylonitrile;
a11)vinyl compounds selected from the group of vinyl halides, vinylidene dihalides, N-vinyl amides, vinyl ethers and vinyl esters that are different from the monomers a4);
a12) allyl compounds;
a13) polysiloxane macromonomers which have a number average molecular weight Mn of 1,000 to 40,000 and on average 0.5 to 2.5 ethylenically unsaturated double bonds per molecule; and
a14) acryloxysilane-containing vinyl monomers.

7. The aqueous, cationically stabilized primary dispersion according to claim 6, wherein the olefinically unsaturated monomer (A) is selected from the group of monomers a1), a2) and a9) and mixtures thereof.

8. The aqueous, cationically stabilized primary dispersion according to one of claims 6 to 7, wherein a mixture of olefinically unsaturated monomers (A) is used, comprising
monomers a1) selected from the group of (meth)acrylic acid alkyl esters or (meth)acrylic acid cycloalkyl esters having up to 20 carbon atoms in the alkyl or cycloalkyl group,
monomers a2) selected from the group consisting of monomers which carry at least one hydroxyl group, one primary, secondary, tertiary or quaternized amino group, and styrene as the monomers a9).

9. A method for preparing aqueous, cationically stabilized primary dispersions according to one or more of claims 1 to 8, wherein
(1) the olefinically unsaturated monomer or monomers (A) and the emulsifier or emulsifiers (E) and optionally crosslinking agents and/or additional binders are introduced into an aqueous medium,
(2) then converted into a miniemulsion under the action of shearing forces, and
(3) an emulsion polymerization is carried out.

10. The method according to claim 9, wherein one or more crosslinking agents from the group consisting of blocked polyisocyanates, tris(alkoxycarbonylamino)triazines and completely etherified aminoplast resins are used as the crosslinking agent.

11. Coating agent compositions, comprising or consisting of an aqueous, cationically stabilized primary dispersion according to one of claims 1 to 8.

12. The coating agent composition according to claim 11, wherein said composition is an electrocoating composition.

13. The use of an aqueous, cationically stabilized primary dispersion according to one of claims 1 to 8 for preparing electrocoating compositions.

## Revendications

1. Dispersion primaire aqueuse stabilisée cationiquement comprenant
1) des particules de polymère dispersées contenant au moins un type de groupe cationique, qui
i. possèdent un diamètre de particule moyen Z situé dans la plage allant de 5 à 500 nm, et
ii. peuvent être obtenues par polymérisation en émulsion d'au moins un monomère à insaturation oléfinique (A), la polymérisation en émulsion étant réalisée en présence d'un ou de plusieurs émulsifiant(s) (E) de formule générale :
R¹-N(R²)(R³),
dans laquelle
R¹ est un radical ayant de 15 à 40 atomes de carbone, contenant au moins un groupe aromatique et au moins un groupe aliphatique, qui contient au moins un groupe fonctionnel choisi parmi les groupes hydroxyle, les groupes thiol et les groupes amino primaires et secondaires, et présente au moins une liaison multiple carbone-carbone, le radical R¹ ayant la structure Grₐₗᵢ₁-Grₐᵣₒₘ-Grₐₗᵢ₂, Grₐᵣₒₘ correspondant à un groupe aromatique, Grₐₗᵢ₁ correspondant à un premier groupe aliphatique et Grₐₗᵢ₂ correspondant à un second groupe aliphatique, et le radical R¹ présentant, dans le groupe aliphatique Grₐₗᵢ₁, l'au moins une liaison multiple carbone-carbone et, dans le groupe aliphatique Grₐₗᵢ₂, l'au moins un groupe fonctionnel choisi parmi les groupes hydroxyle, les groupes thiol et les groupes amino primaires ou secondaires,
R² et R³ sont indépendamment l'un de l'autre des radicaux aliphatiques identiques ou différents ayant 1 à 14 atomes de carbone.

2. Dispersion primaire aqueuse stabilisée cationiquement selon la revendication 1, dans laquelle le radical R¹ présente, dans le groupe aliphatique Grₐₗᵢ₂, un groupe fonctionnel choisi parmi les groupes hydroxyle, les groupes thiol et les groupes amino primaires ou secondaires en position bêta par rapport à l'atome d'azote de la formule générale de l'émulsifiant selon la revendication 1.

3. Dispersion primaire aqueuse stabilisée cationiquement selon l'une quelconque des revendications 1 à 2, dans laquelle
Grₐₗᵢ₁ est linéaire, non substitué et exempt d'hétéroatomes, et présente une à trois doubles liaisons,
Grₐᵣₒₘ est un groupe phénylène ou naphtylène, et
Grₐₗᵢ₂ est linéaire et contient un groupe hydroxyle en position bêta par rapport à l'atome d'azote de la formule générale de l'émulsifiant (E) et également en tant qu'hétéroatome O, sous la forme d'un groupe éther.

4. Dispersion primaire aqueuse stabilisée cationiquement selon l'une quelconque des revendications 1 à 3, dans laquelle les radicaux R² et/ou R³, portent, outre les groupes hydroxyle, thiol, amino primaires et secondaires, au moins un autre groupe fonctionnel choisi parmi les groupes éther, les groupes ester et les groupes amide.

5. Dispersion primaire aqueuse stabilisée cationiquement selon l'une quelconque des revendications 1 à 4, dans laquelle on utilise un mélange d'émulsifiants (E), mélange dans lequel plus de 50 % en moles des radicaux R¹ contiennent des liaisons multiples carbone-carbone.

6. Dispersion primaire aqueuse stabilisée cationiquement selon l'une quelconque des revendications 1 à 5, dans laquelle le monomère à insaturation oléfinique (A) est choisi dans le groupe constitué par
a1) les esters d'acide (méth)acrylique exempts de groupes acides ;
a2) les monomères qui portent au moins un groupe hydroxyle, un groupe amino primaire, secondaire, tertiaire ou quaternisé, un groupe alcoxyméthylamino ou un groupe imino par molécule, sont exempts de groupes acides et différents des émulsifiants (E) ;
a3) les monomères qui portent au moins un groupe acide convertible en groupe anion acide correspondant par molécule ;
a4) les esters vinyliques d'acides monocarboxyliques alpha-ramifiés ayant de 5 à 18 atomes de carbone dans la molécule ;
a5) les produits de réaction de l'acide acrylique et/ou de l'acide méthacrylique avec l'ester glycidylique d'un acide monocarboxylique alpha-ramifié ayant de 5 à 18 atomes de carbone par molécule ;
a6) les oléfines cycliques ou acycliques ;
a7) les amides d'acide (méth)acrylique ;
a8) les monomères contenant des groupes époxyde ;
a9) les hydrocarbures vinylaromatiques ;
a10) l'acrylonitrile ou le méthacrylonitrile ;
a11) les composés vinyliques choisies dans le groupe constitué par les halogénures de vinyle, les dihalogénures de vinylidène, les N-vinylamides, les éthers vinyliques et les esters vinyliques autres que les monomères a4) ;
a12) les composés allyliques ;
a13) les macromonomères de polysiloxane présentant une masse moléculaire moyenne en nombre Mₙ située dans la plage allant de 1 000 à 40 000 et une moyenne de 0,5 à 2,5 doubles liaisons à insaturation éthylénique par molécule ; et
a14) les monomères vinyliques contenant un acryloxysilane.

7. Dispersion primaire aqueuse stabilisée cationiquement selon la revendication 6, dans laquelle le monomère à insaturation oléfinique (A) est choisi dans le groupe constitué par les monomères a1), a2) et a9), ainsi que les mélanges de ceux-ci.

8. Dispersion primaire aqueuse stabilisée cationiquement selon l'une quelconque des revendications 6 à 7, dans laquelle un mélange de monomères à insaturation oléfinique (A) est utilisé, comprenant
des monomères a1) choisis dans le groupe constitué par les esters alkyliques d'acide (méth)acrylique ou les esters cycloalkyliques d'acide (méth)acrylique ayant jusqu'à 20 atomes de carbone dans le radical alkyle ou cycloalkyle,
des monomères a2) choisis dans le groupe constitué par les monomères qui portent au moins un groupe hydroxyle, un groupe amino primaire, secondaire, tertiaire ou quaternisé et, en tant que monomères a9), le styrène.

9. Procédé de préparation de dispersions primaires aqueuses stabilisées cationiquement selon une ou plusieurs des revendications 1 à 8, dans lequel
1) le ou les monomère(s) à insaturation oléfinique (A) et le ou les émulsifiant(s) (E) et éventuellement des agents de réticulation et/ou d'autres liants sont introduits dans un milieu aqueux,
2) puis transformés en mini-émulsion sous l'effet de forces de cisaillement, et
3) dans lequel on effectue une polymérisation en émulsion.

10. Procédé selon la revendication 9, dans lequel on utilise comme agent de réticulation un ou plusieurs agent(s) de réticulation choisi(s) dans le groupe constitué par les polyisocyanates bloqués, les tris(alcoxycarbonylamino)triazines et les résines aminoplastes totalement éthérifiées.

11. Compositions de revêtement comprenant ou consistant en une dispersion primaire aqueuse stabilisée cationiquement selon l'une quelconque des revendications 1 à 8.

12. Composition de revêtement selon la revendication 11, qui est une composition d'électrodéposition.

13. Utilisation d'une dispersion primaire aqueuse stabilisée cationiquement selon l'une quelconque des revendications 1 à 8 pour produire des compositions d'électrodéposition.
